# FASCICULE DE BREVET EUROPEEN

(11) **EP 1 971 665 B1**
(45) Date de publication et mention de la délivrance du brevet: **16.09.2009**
(21) Numéro de dépôt: 07703772.9
(22) Date de dépôt: 10.01.2007
(51) Int. Cl.: C09K 11/06, C09K 9/02

(54) **COMPOSES FLUORESCENTS DENDRIMERIQUES ET UTILISATION DE TELS COMPOSES DANS LE CADRE DE PROCEDES OU DISPOSITIFS MULTIPHOTONIQUES**
FLUORESZENTE DENDRIMERE UND VERWENDUNG DERARTIGER VERBINDUNGEN FÜR MULTIFOTONENVORRICHTUNGEN ODER -VERFAHREN
DENDRIMERIC FLUORESCENT COMPOUNDS AND USE OF SUCH COMPOUNDS IN MULTI-PHOTON DEVICES OR PROCESSES

(30) Priorité: 13.01.2006 FR 0600339
(43) Date de publication de la demande: 24.09.2008
(73) Titulaire: Universite de Rennes 1, 35065 Rennes Cedex (FR); C.N.R.S. (Centre National de Recherche Scientifiqu, 35069 Rennes Cedex (FR)
(72) Inventeur: BLANCHARD-DESCE, Mireille, F-35000 Rennes (FR); WERTS, Martinus, F-35700 Rennes (FR); MONGIN, Olivier, F-35000 Rennes (FR); MAJORAL, Jean-Pierre, F-31520 Ramonville Saint-Agne (FR); CAMINADE, Anne-Marie, F-31400 Toulouse (FR); THATAVARTHY, Rama Krishna, Hyderabad - 500008 (IN)
(74) Mandataire: Larcher, Dominique
(86) Numéro de dépôt international: PCT/EP2007/050225
(87) Numéro de publication internationale: WO 2007/080176

(56) Documents cités:
- US-A1- 2005 214 767
- MONGIN O, PORRÈS L, MOREAUX L, MERTZ J, BLANCHARD-DESCE M: "Synthesis and Photophysical Properties of New Conjugated Fluorophores Designed for Two-Photon-Excited Fluorescence" ORGANIC LETTERS, vol. 4, no. 5, 2002, pages 719-722, XP002400044
- WERTS M H, GMOUH S, MONGIN O, PONS T, BLANCHARD-DESCE M: "Strong Modulation of Two-Photon Excited Fluorescence of Quadripolar Dyes by (De)Protonation" JOURNAL OF THE AMERICAN CHEMICAL SOCIETY, vol. 126, 2004, pages 16294-16295, XP002400045
- MARAVAL V, LAURENT R, MARCHAND P, CAMINADE A-M, MAJORAL J-P: "Accelerated methods of synthesis of phosphorus-containing dendrimers" JOURNAL OF ORGANOMETALLIC CHEMISTRY, vol. 690, no. 10, 2005, pages 2458-2471, XP002400046
- KATAN C, TERENZIANI F, MONGIN O, WERTS M H V, PORRES L, PONS T,MERTZ J, TRETIAK S, BLANCHARD-DESCE M: "Effects of (Multi)branching of Dipolar Chromophores on Photophysical Properties and Two-Photon Absorption" J. PHYS. CHEM. A., vol. 109, 2005, pages 3024-3037, XP002400047
- LE DROUMAGUET C, MONGIN O, WERTS M H V, BLANCHARD-DESCE M: "Towards smart multiphoton fluorophores: strongly solvatochromic probes for two-photon sensing of micropolarity" CHEM. COMMUN., 2005, pages 2802-2804, XP002400048
- BROUSMICHE D W, SERIN J M, FRECHET J M J, HE G S, LIN T-C, CHUNG S-J, PRASAD P N, KANNAN R, TAN L-S: "Fluorescence Resonance Energy Transfer in Novel Multiphoton Absorbing Dendritic Structures" J. PHYS. CHEM. B., vol. 108, 2004, pages 8592-8600, XP002400049
- CAMINADE A-M, MAJORAL J-P: "Water-soluble phosphorus-containing dendrimers" PROGRESS IN POLYMER SCIENCE, vol. 30, 2005, pages 491-505, XP002400172

## Description

L'invention concerne le domaine de la conception et de la réalisation de composés fluorescents ("fluorophores") présentant des propriétés les rendant susceptibles d'être mis en oeuvre dans les procédés et dispositifs multiphotoniques et notamment les procédés et dispositifs biophotoniques.

L'étude des grandes fonctions cellulaires telles que par exemple l'expression du génome, le trafic membranaire, l'étude de la mobilité des cellules et de leur organisation en tissus, nécessitent de localiser, mesurer et quantifier *in vivo,* à l'échelle microscopique et nanoscopique, les dynamiques et interactions entre molécules d'intérêt biologique (protéines, acides nucléiques, lipides, ions...).

La microscopie de fluorescence classique, qui met en oeuvre des marqueurs (fluorophores) excitables par une excitation monophotonique, même si elle constitue un outil puissant pour l'imagerie du vivant présente toutefois un certain nombre d'inconvénients, qui limite son intérêt dans ce domaine d'application.

En premier lieu, elle met souvent en oeuvre des sondes excitables dans le domaine ultraviolet ou dans la partie bleue du spectre visible. Une telle excitation dans ce domaine peut s'avérer toxique pour les tissus vivants.

En second lieu, elle ne permet qu'une observation de profondeur limitée dans les tissus vivants du fait de la diffusion plus importante de la lumière visible que de la lumière infra-rouge, et de l'absorption intrinsèque des biomolécules.

En troisième lieu, elle peut induire une fluorescence endogène des tissus vivants gênante pour l'observation.

La microscopie multiphotonique permet de s'affranchir de ces problèmes grâce à la technique de fluorescence induite par excitation à deux photons (ci-après parfois dénommée "TPEF").

Cette technique est basée sur le concept selon lequel certains atomes ou molécules peuvent absorber simultanément deux photons. Cette propriété d'absorption à deux photons (ci-après parfois appelée "ADP") de certaines molécules est caractérisée par leur section efficace d'ADP, notée σ₂.

Ainsi, certaines molécules fluorescentes (fluorophores) excitables par un photon d'énergie hv et de longueur d'onde λ sont aussi susceptibles d'être excitées simultanément par deux photons d'énergie hv/2 et de longueur d'onde 2λ. Une excitation monophotonique dans le domaine UV-partie bleue du spectre visible peut ainsi être remplacée par une excitation biphotonique dans le domaine rouge-proche infrarouge, non toxique pour les tissus vivants et générant moins de fluorescence endogène des échantillons observés.

De plus, le caractère non linéaire de l'absorption localise l'excitation, et donc l'émission des fluorophores, au point de focalisation du laser dans l'échantillon à étudier. Ainsi, des images tridimensionnelles de tissus biologiques in vivo peuvent être obtenues avec une résolution de l'ordre du micromètre jusqu'à des profondeurs de 500 µm au moins et ce sans provoquer de dommage pour ces tissus.

Ce caractère non linéaire de l'absorption permet également une résolution spatiale en trois dimensions fine.

En pratique, l'absorption à deux photons observée chez certains atomes ou molécules a permis le développement de nombreuses technologies dans des domaines d'application très variés, tels que la microfabrication en 3 dimensions, le stockage optique des données, la thérapie photodynamique et la limitation optique (c'est-à-dire la protection contre l'agression laser).

Le développement de la TPEF a donc ouvert la voie à la mise au point de procédés et de dispositifs performants adaptés au milieu vivant (et donc dits procédés et dispositifs "biophotoniques") dans le domaine de l'imagerie cellulaire (microscopie, imagerie 3D), dans le domaine des outils de diagnostic (sondes fluorescentes, particules absorbantes, biopuces), dans le domaine thérapeutique (photothérapie ou thérapie photodynamique).

Or, on constate sur le marché un manque de composés fluorophores spécialement adaptés à ces nouvelles technologies.

En effet, les composés fluorophores actuellement utilisés dans les techniques multiphotoniques sont optimisés pour les techniques classiques de fluorescence, c'est-à-dire mettant en oeuvre une excitation monophotonique.

Ces composés classiques de l'état de la technique ne sont pas optimisés pour les techniques multiphotoniques et notamment pas pour les techniques biphotoniques.

En pratique, ces composés présentent des propriétés d'ADP médiocres dans la fenêtre spectrale d'intérêt biologique (700 à 1200 nm) et doivent être utilisés à des concentrations susceptibles de perturber le milieu observé. Leur utilisation en excitation biphotonique requiert donc, de par leur faible réponse à ce type d'excitation, des intensités lumineuses élevées et/ou des concentrations élevées de chromophores pour générer un signal détectable.

On connaît également dans l'état de la technique des nanoparticules luminescentes présentant un rayon allant jusqu'à 3 nanomètres et constituées de nanocristaux semi-conducteurs et connus de l'homme de l'art sous la dénomination « quantum dots ». Ces quantum dots, qui sont notamment décrits dans l'article de Daniel R. Larson et al « Water-Soluble Quantum dots for multiphoton fluorescence imaging in vivo »; Science 2003 Volume 300, 1434-1436, ont connu des développements spectaculaires. Il a en effet été démontré que de tels systèmes pouvaient présenter des sections efficaces de TPEF (σ₂φ) très élevées et en pratique allant à ce jour jusqu'à 47000 GM, autorisant ainsi leur utilisation en imagerie biphotonique du vivant.

Toutefois, ces quantum dots présentent aussi un certain nombre d'inconvénients.

En premier lieu, du fait qu'ils intègrent dans leur structure des métaux lourds tels que le cadmium, ils présentent une toxicité non négligeable à l'égard des tissus vivants. Leurs procédés de synthèse présentent corollairement l'inconvénient de mettre en oeuvre des produits également toxiques.

En second lieu, ces quantum dots présentent aussi l'inconvénient de constituer des structures qui ne sont pas facilement fonctionnalisables. En particulier, ces structures ne se prêtent pas facilement à l'accrochage de manière covalente sur de petites molécules pour cibler, à l'échelle moléculaire et sans les perturber, des cibles biologiques identifiées telles que des édifices protéiques ou de l'ADN par exemple. Cet aspect limite considérablement l'utilisation de ces quantum dots dans les applications biologiques.

Enfin, afin d'être protégés du milieu ambiant, ils présentent également l'inconvénient de devoir être encapsulés dans des polymères, ce qui complexifie leur mode de fabrication.

L'objectif principal de la présente invention est de proposer de nouveaux composés chimiques fluorescents spécialement adaptés pour être mis en oeuvre dans les techniques multiphotoniques et notamment biphotoniques.

Notamment, un objectif de la présente invention est de décrire de tels composés qui permettent de garantir l'innocuité des techniques dans le cadre desquelles elles sont utilisées, tout en présentant une sensibilité et une sélectivité élevées.

Notamment, un objectif de la présente invention est de proposer de tels composés qui présentent à la fois des rendements quantiques de fluorescence (φ) élevés dans des milieux variés (y compris l'eau dans le cas de dérivés solubles dans l'eau), des sections efficaces d'ADP (σ₂) optimisées pour la gamme spectrale d'intérêt biologique (700-1200 nm), corollairement des brillances (σ₂, φ) élevées, une bonne photostabilité et une faible toxicité.

Une brillance élevée permet en effet de réduire la concentration en marqueurs moléculaires fluorescents et/ou l'intensité d'excitation, ce qui est hautement désirable pour l'imagerie biologique.

Egalement un objectif de la présente invention est de proposer une panoplie de tels composés fluorescents susceptibles de s'adresser à des cibles très différentes.

Encore un autre objectif de la présente invention est de proposer de tels composés capables de produire des signaux lumineux distinguables par leurs longueurs d'onde d'émission et autorisant ainsi la mise en oeuvre d'un multiplexage (le flux lumineux émanant de l'échantillon marqué par plusieurs fluorophores peut ainsi transporter simultanément plusieurs signaux séparables à l'aide de filtres).

Encore un objectif de la présente invention est de proposer des composés organiques susceptibles d'être utilisés dans tout procédé ou dispositif mettant en oeuvre une absorption à deux photons, voire à trois photons, présentant une section efficace d'ADP (σ₂) et une brillance (produit de la section efficace d'ADP, σ₂, par le rendement quantique de fluorescence, φ) comparables à celles des quantum dots inorganiques.

Un autre objectif de la présente invention est de proposer de tels composés qui occupent un volume le plus petit possible.

Encore un objectif de la présente invention est de proposer de tels composés autorisant un greffage de groupes fonctionnels variés présentant différents types de fonctionnalités.

Notamment, un objectif particulier de la présente invention est de présenter de tels composés chimiques solubles dans l'eau grâce à de tels groupes fonctionnels.

Ces différents objectifs sont atteints grâce à l'invention qui concerne tout composé chimique fluorescent constitué par un dendrimère de n génération(s), n étant un entier non nul, montrant :
au moins un noyau central (N) de valence m ;
au moins un premier motif (X) non chromophorique, de valence m', m motifs (X) étant directement reliés audit noyau central (N) et/ou x motifs formant au moins une génération dudit dendrimère ; et,
au moins un deuxième motif (Y) présentant des propriétés d'absorption à deux photons, de valence m", m motifs (Y) étant directement reliés audit noyau central (N) et/ou y motifs (Y), appartenant à, ou formant au moins une génération dudit dendrimère.

L'invention couvre donc les cas de figure ou des motifs non chromophorique (X) ou des motifs chromophoriques (Y) sont directement liés au noyau (N). Selon la nomenclature utilisée pour les dendrimères, ces motifs ne forment pas une « génération » du dendrimère.

x et y sont bien sûr des entiers, identiques et différents et vise le nombre des motifs respectivement chromophoriques et non chromophoriques entrant dans la sturcture des générations des composés dendrimériques fluorescents selon l'invention. On comprendra que ces entiers pourront varier considérablement en fonction des valences de ces motifs (X) et (Y) et de celle du noyau (N).

La présente invention consiste donc à réaliser un dendrimère fluorescent (c'est-à-dire possédant dans un solvant un rendement quantique de fluorescence, φ, supérieur à 10%), présentant au moins deux types d'unités (motifs), à savoir des motifs non chromophoriques, c'est-à-dire ne présentant pas de propriétés d'absorption à deux photons, et des motifs présentant de telles propriétés.

Les dendrimères, appelés aussi « molécules cascade », sont des polymères fonctionnels hautement ramifiés de structure définie présentant une construction en arborescence. Ces macromolécules sont effectivement des polymères puisqu'elles sont basées sur la répétitivité d'un ou plusieurs motifs. Cependant, les dendrimères diffèrent fondamentalement des polymères classiques dans la mesure où ils ont des propriétés propres dues à leur construction en arborescence. Le poids moléculaire et la forme des dendrimères peuvent être précisément contrôlés. Ils peuvent être dotés de fonctions terminales situées à la terminaison des arborescences, formant une surface, ce qui les rend facilement accessibles.

Les dendrimères sont construits étape par étape, à partir d'un noyau, par la répétition d'une séquence de réaction permettant la multiplication de chaque motif de façon répétitive et des fonctions terminales. Chaque séquence de réaction forme ce qui est appelé une « nouvelle génération ».

La construction arborescente s'effectue par la répétition d'une séquence de réactions qui permet l'obtention à la fin de chaque cycle réactionnel d'une nouvelle génération et d'un nombre croissant de branches identiques. Les générations sont comptées à partir de chaque division d'une branche en au moins deux branches.

Après quelques générations, le dendrimère prend généralement une forme globulaire hautement ramifiée et plurifonctionnalisée grâce aux nombreuses fonctions terminales présentes en périphérie.

De tels dendrimères ont notamment été décrits par Launay et al., Angew. Chem. Int. Ed. Engl., 1994, 33, 15/16, 1589-1592, ou encore Launay et al., Journal of Organometallic Chemistry, 1997, 529, 51-58.

Les composés selon la présente invention constituent des « nano objets » qui présentent une taille similaire à celles des quantum dots, et qui présentent des performances de fluorescence, notamment de TPEF compétitives par rapport à celles des structures de l'art antérieur.

Les composés selon la présente invention intègrent un grand nombre de motifs chromophoriques absorbeurs à deux photons (motifs Y). Ces motifs pourront être prévus au niveau de la dernière génération (génération externe) du dendrimère mais également au niveau des génération internes de celui-ci.

Ces motifs chromophoriques pourront par ailleurs être de natures variées.

La présente invention offre donc la possibilité de moduler les propriétés de ces composés, en jouant :
sur le nombre et la nature des motifs chromophoriques intégrés dans leur structure,
sur la possibilité de faire varier leur solubilité dans différents environnements par l'addition, au niveau de leur couche externe de groupes de solubilisation, et
sur la possibilité d'addition de groupes fonctionnels par liaisons covalentes susceptibles de conférer à ces composés des fonctionnalités supplémentaires.

On notera qu'il a déjà été proposé dans l'état de la technique des composés de structure dendrimérique présentant des propriétés d'absorption à deux photons.

Dans l'article de Drobizhev et al. « Strong coopérative Enhancement of Two-Photon Absorption in dendrimers » J. Phys. Chem. B 2003, 107, 7540-7543, le dendrimère est constitué d'un seul chromophore, composé de plusieurs unités subchromophoriques conjuguées. Une telle approche ne permet pas d'envisager la modularité exposée ci-dessus. De plus, le nombre de chromophores intégrés dans une telle structure reste limité.

L'article d'Olivier Mongin et al. « Synthesis and Two-Photon Absorption of triphenylbenzene-cored dendritic chromophores »; Tetrahedron Letters 44 (2003) 2813-2816, concerne également des structures dendrimériques constituées complètement à partir d'un seul motif chromophorique, et dont les sections d'ADP σ₂ ne dépassent pas 798 GM.

L'article d' Alex Adronov et al. « Novel Two-Photon Absorbing Dendritic Structures », Chem. Mater. 2000, 12, 28-38-28-41, propose quant à lui de réaliser un dendrimère présentant un coeur et deux générations d'un motif benzylé à deux valences ne présentant pas de propriétés d'absorption à deux photons, et de greffer 8 chromophores constituant la troisième et dernière génération de ce dendrimère. Selon les travaux exposés dans cet article, le nombre de motifs chromophoriques par dendrimère est limité à huit alors que la présente invention permet d'obtenir des composés présentant bien plus de motifs chromophoriques. De plus la section efficace d'ADP du dendrimère selon Adronov et al n'est que de 2600 GM alors que l'invention permet l'obtention de section efficace bien supérieures. Les auteurs ne se sont intéressés ni au rendement quantique de fluorescence, ni à la brillance des dendrimères réalisés. Les travaux exposés dans cet article ont en fait visé à étudier l'éventuel effet coopératif des chromophores entre eux, par rapport aux sections d'ADP, dans une telle structure.

D'une façon préférée, les composés dendrimériques fluorescents selon l'invention présentent plus de 3 générations. Il est ainsi possible d'obtenir des molécules présentant un plus grand nombre de motifs chromophoriques et/ou d'ajouter au niveau de leur couche externe un plus grand nombre de groupes de solubilisation.

Préférentiellement, la valence m du noyau des composés selon l'invention est égale à 2, 3, 4, 6, 8 ou 10.

Egalement préférentiellement, ledit noyau (N) et/ou ledit motif (X) contient (contiennent) au moins un atome de phosphore.

Selon l'invention, ledit noyau (N) de valence m dudit dendrimère est choisi dans le groupe constitué par : 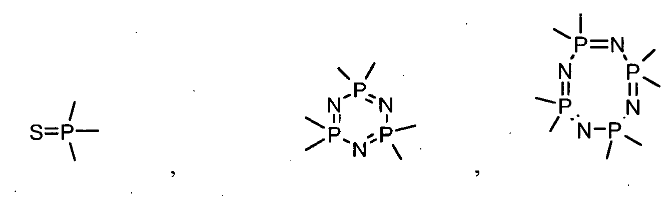 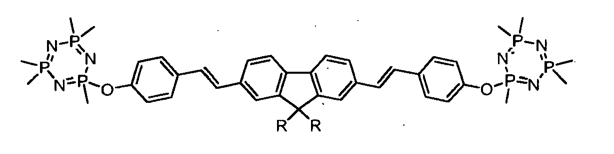 ou 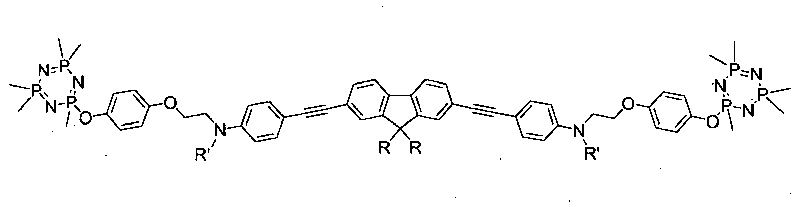 R et R', identiques ou différents, désignant un radical choisi dans le groupe constitué par l'hydrogène et les radicaux alkyles en C₁ à C₂₅, préférentiellement en C₁ à C₁₂.

Selon une variante particulièrement intéressante, ledit noyau (N) est

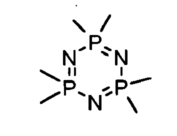

Selon l'invention, ledit motif (X) non chromophorique est choisi dans le groupe constitué par :

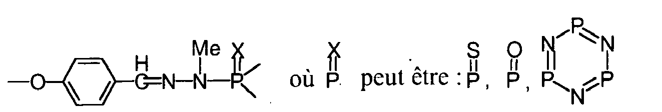

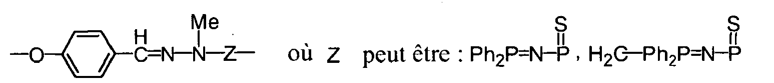

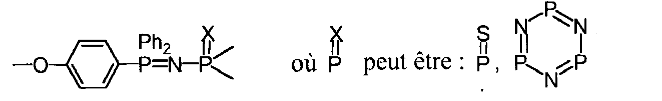

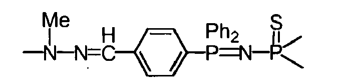

Selon l'invention, ledit motif chromophorique (Y) est constitué d'un radical chromophorique multiphotonique (Y1) lié à au moins un appendice de greffage (Y2).

Ledit radical chromophorique (Y1) répond à l'une des deux structures suivantes : 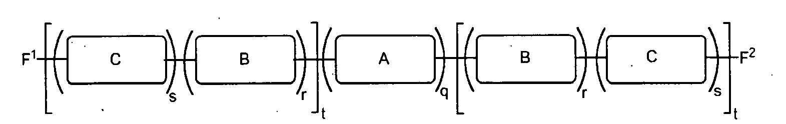 ou 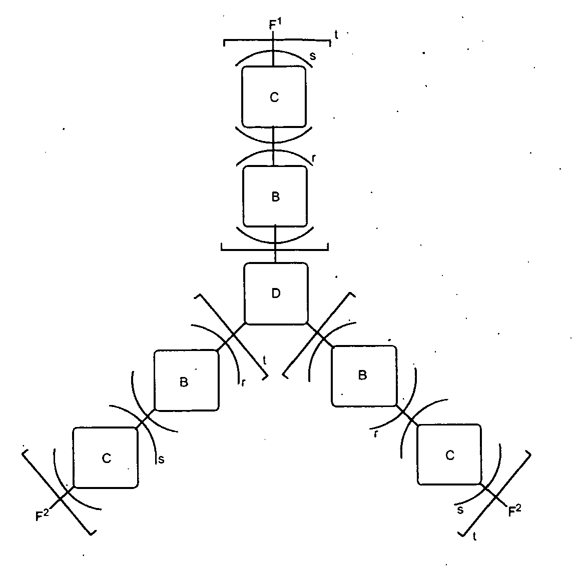
dans lesquelles F¹ et F², identiques ou différents, désignent un groupement électroactif (donneur ou accepteur d'électrons), F¹ étant lié à un appendice de greffage, et F² étant lié à 0, 1 ou 2 appendices de greffages, F¹ et F² étant préférentiellement choisis parmi : 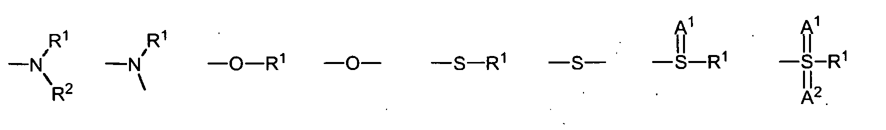
R¹ et R², identiques ou différents, désignant soit un appendice de greffage (Y2), soit un radical choisi dans le groupe constitué par l'hydrogène, les radicaux alkyles en C₁ à C₂₅, préférentiellement en C₁ à C₁₂, (CH₂)ₘ₁-SO₃M, (CH₂)ₘ₁NAlk₃⁺, (CH₂)ₘ₁-(OCH₂-CH₂)ₚ-OH, M étant un métal alcalin et m1 étant égal à 0 ou étant un entier compris entre 1 et 12, préférentiellement entre 1 et 6, p étant un entier compris entre 1 et 25 ;
A¹ et A², identiques ou différents, représentant O, NH, NAlk, NCF₃ ; 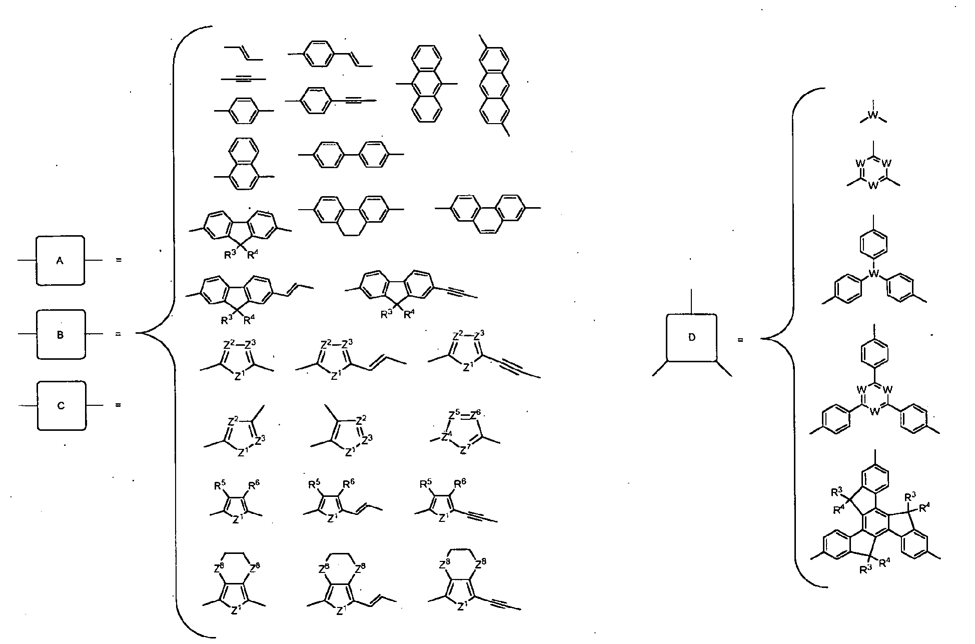
R³ et R⁴, identiques ou différents, désignent un radical choisi dans le groupe constitué par l'hydrogène, les radicaux alkyles en C₁ à C₂₅, préférentiellement en C₁ à C₁₂, (CH₂)ₘ₁-SO₃M, (CH₂)ₘ₁NAlk₃⁺, (CH₂)ₘ₁-(OCH₂-CH₂)ₚ-OH, M étant un métal alcalin et m1 étant égal à 0 ou étant un entier compris entre 1 et 12, préférentiellement entre 1 et 6, p étant un entier compris entre 1 et 25 ;
R⁵ et R⁶, identiques ou différents représentant chacun un radical OH, OAlk, OAr, SH, SAlk, SAr ;
Z¹, représentant O, S, NH, NAlk, NAr, PH, PAlk ou PAr ;
Z², Z³ représentant chacun CH, CAlk ou N ;
Z⁴ représentant N ou P ;
Z⁵, Z⁶, Z⁷ représentant chacun CH, CAlk ou N ;
Z⁸ représentant O ou S ;
q étant un entier compris entre 1 et 7 ;
r étant un entier compris entre 1 et 7 ;
s étant un entier compris entre 0 et 7 ;
t étant un entier compris entre 1 et 7 ;
W étant CH ou B ou N ou P ou PO.

Selon l'invention, ledit appendice de greffage (Y2) est choisi parmi : 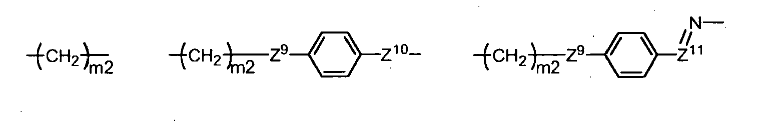 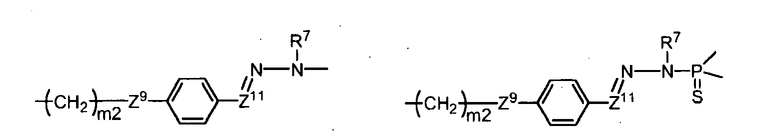
m2 étant un entier compris entre 0 et 12, préférentiellement entre 0 et 6 ;
Z⁹ et Z¹⁰, identiques ou différents, représentant O, S, NH, NAlk, NAr ;
Z¹¹, représentant CH, CAlk, CAr, PAlk₂, PAr₂

Préférentiellement, ledit motif (Y) est choisi dans le groupe constitué par : 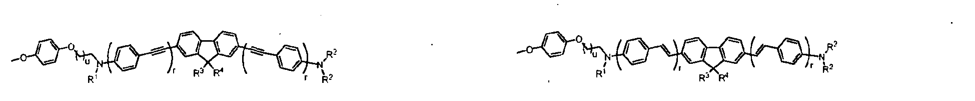 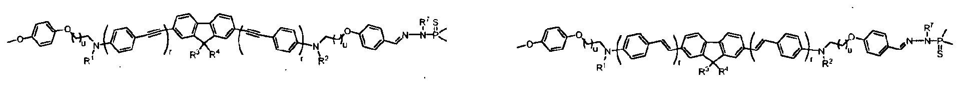 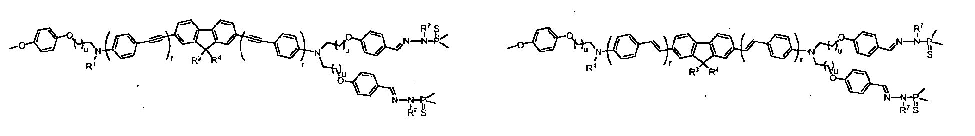
R¹, R², R³, R⁴, R⁷ et r ayant la même signification que précédemment ;
u étant un entier compris entre 1 et 11, préférentiellement entre 1 et 5.

Selon une variante de l'invention; ledit dendrimère montre au moins un troisième motif (Z) formant la couche extérieure de la génération Gn dudit dendrimère et présentant des propriétés de solubilisation du dendrimère soit dans l'eau, soit dans des solvants organiques.

Préférentiellement, ledit motif (Z) est un motif ammonium ou pyridinium ou carboxylate ou sulfonate ou une chaîne polyéthylèneglycol.

Avantageusement, le composé selon l'invention répond à l'une quelconque des formules :

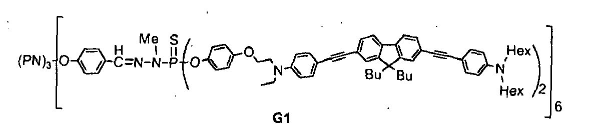

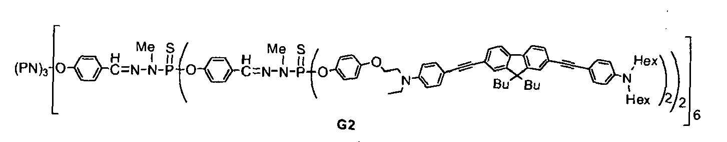

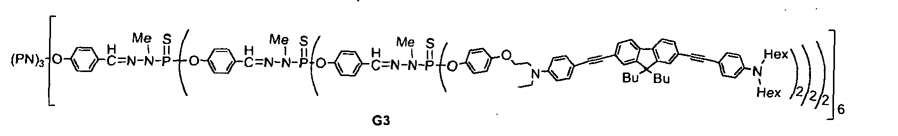

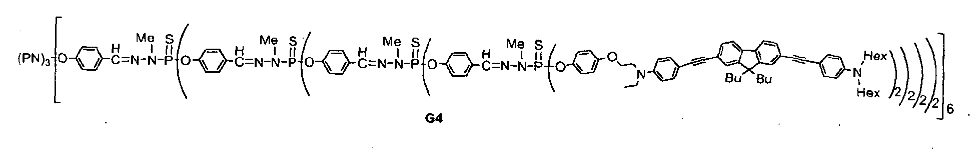

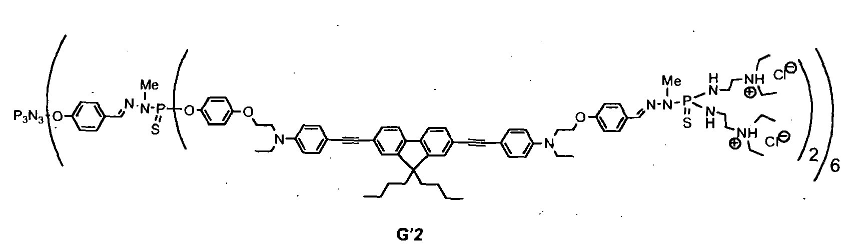

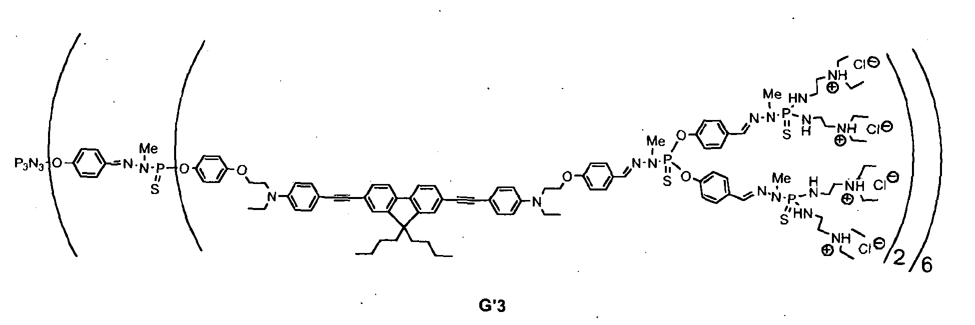

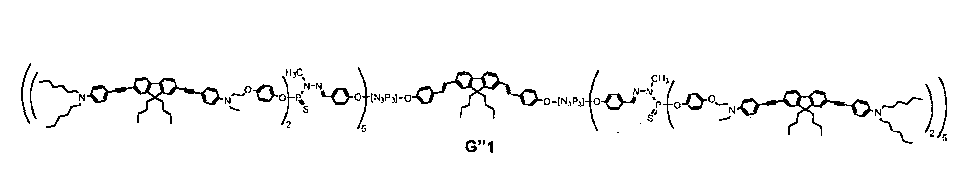

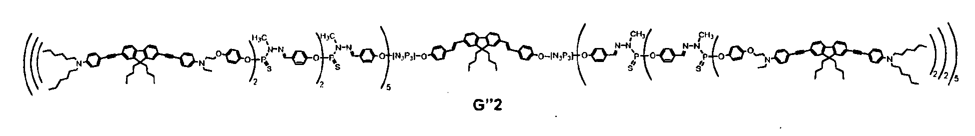

Selon une autre variante de l'invention, les composés selon l'invention peuvent aussi présenter deux noyaux de valences identiques ou différentes, liés directement l'un à l'autre ou liés entre eux par l'intermédiaire d'un motif (Y) présentant des propriétés d'absorption à deux photons.

Egalement selon une variante, les composés selon l'invention peuvent présenter au moins deux types de motifs (Y,Y') présentant des propriétés d'absorption à deux photons.

Selon un tel cas de figure, les différents types de motifs présentant des propriétés d'absorption à deux photons pourront posséder des propriétés d'émission de longueur d'ondes différentes.

Selon une variante intéressante, les différents types de motifs présenteront des propriétés d'absorption à deux photons possédant des propriétés d'émission de longueur d'ondes différentes dont la somme concourre à l'émission d'une lumière blanche.

L'invention couvre également toute utilisation d'un composé tel que décrit ci-dessus dans tout procédé ou dispositif mettant en oeuvre une absorption à un ou deux ou trois photons.

L'invention couvre notamment tout utilisation d'un tel composé dans le cadre d'un procédé ou d'un dispositif biphotonique notamment dans le cadre d'un procédé ou d'un dispositif d'imagerie photonique.

L'invention, ainsi que les différents avantages qu'elle présente seront plus facilement compris grâce à la description qui va suivre de modes non limitatifs de réalisation de celle-ci donnés en référence aux dessins, dans lesquels :
- la figure 1 représente le schéma de synthèse d'un fluorophore destiné à former le motif chromophorique Y de composés selon l'invention ;
- les figures 2 à 5 représentent les structures développées de quatre composés G1 à G4 selon l'invention ;
- les figures 6 et 7 représentent les spectres d'absorption et d'émission dans le toluène de ce fluorophore et de ces quatre composés selon l'invention ;
- la figure 8 représente les spectres d'absorption à deux photons dans le toluène de ce fluorophore et de ces quatre composés selon l'invention, déterminés par des mesures TPEF à l'aide d'un laser titane-saphir à impulsions femtosecondes ;
- les figures 9 et 10 représentent la formule de deux autres composés G'2 et G'3 selon la présente invention ;
- la figure 11 représente le schéma de synthèse d'un fluorophore destiné à former le motif chromophorique Y de ces deux autres composés ;
- la figure 12 représente le schéma de synthèse du composé G'2 ;
- la figure 13 représente le schéma de synthèse du composé G'3 ;
- la figure 14 représente le schéma de synthèse du composé G"1 selon la présente invention ;
- la figure 15 représente le schéma de synthèse du composé G"2 selon la présente invention ;
- les figures 16 et 17 représentent les spectres d'absorption et d'émission dans le toluène des composés G"1 et G"2 ;
- la figure 18 représente les spectres d'absorption à deux photons dans le toluène de ces deux composés selon l'invention, déterminés par des mesures TPEF à l'aide d'un laser titane-saphir à impulsions femtosecondes ;

Selon un premier mode de réalisation de l'invention, on a synthétisé quatre composés chimiques fluorescents dendrimériques selon la présente invention, présentant respectivement 1, 2, 3 et 4 générations répondant aux formules :

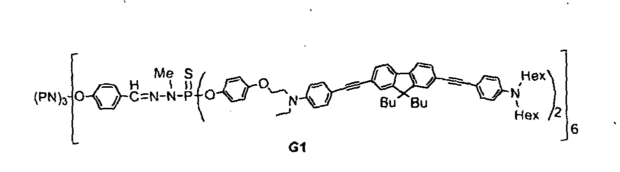

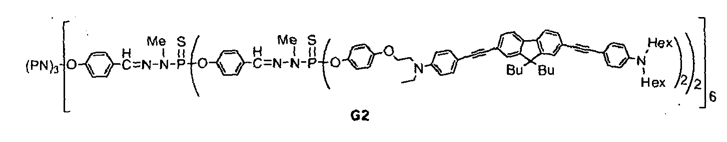

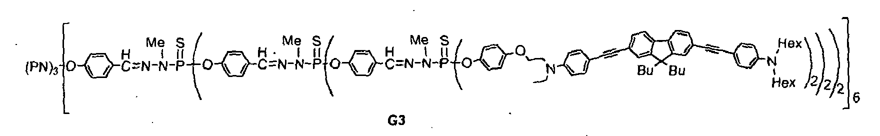

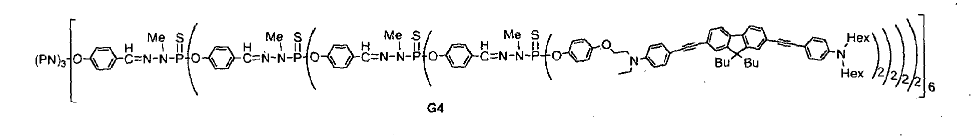

Dans le composé G1, 6 motifs X sont directement liés au noyau et 12 motifs Y sont reliés à ceux-ci. Les motifs Y forment une génération du composé.

Dans les composés G2,G3 et G4, 6 premiers motifs X sont directement liés au noyau, des motifs X sont liés à ces premiers motifs pour former respectivement 1, 2 et 3 générations des composés et des motifs Y appartiennent à la génération « externe » de chaque composé.

Ces composés présentent un noyau à 6 valences de formule: 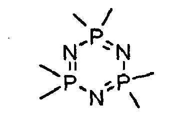 des chaînes de génération non chromophoriques en arborescence autour du noyau (motifs X) de formule : 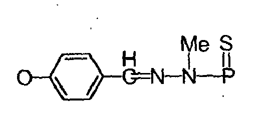 et des motifs chromophoriques (motifs Y) de formule :

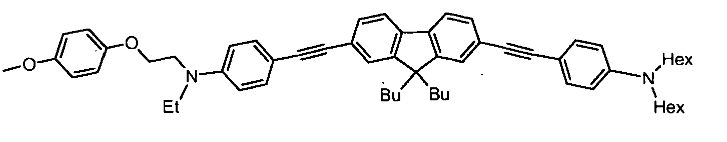

Ces composés selon l'invention ont été réalisés en faisant réagir des dendrimères de formules 2-G1, 2-G2, 2-G3 et 2-G4, et présentant le noyau ci-dessus et le motif X : 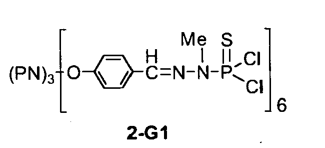 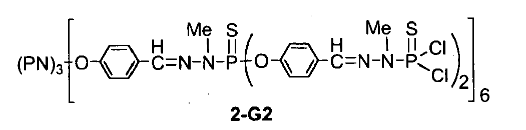 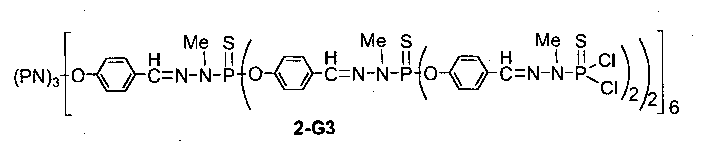 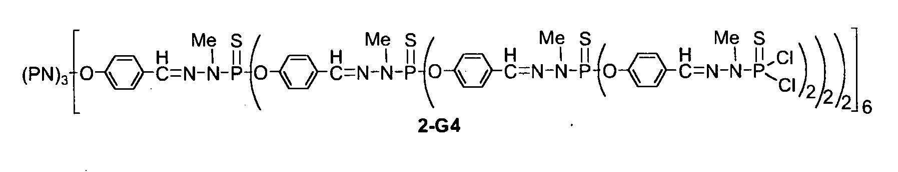 avec des quantités croissantes d'un chromophore absorbeur à deux photons de formule 1 présentant le motif Y : 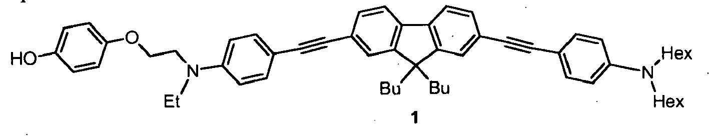 par substitution nucléophile des groupes P(S)Cl₂ terminaux.

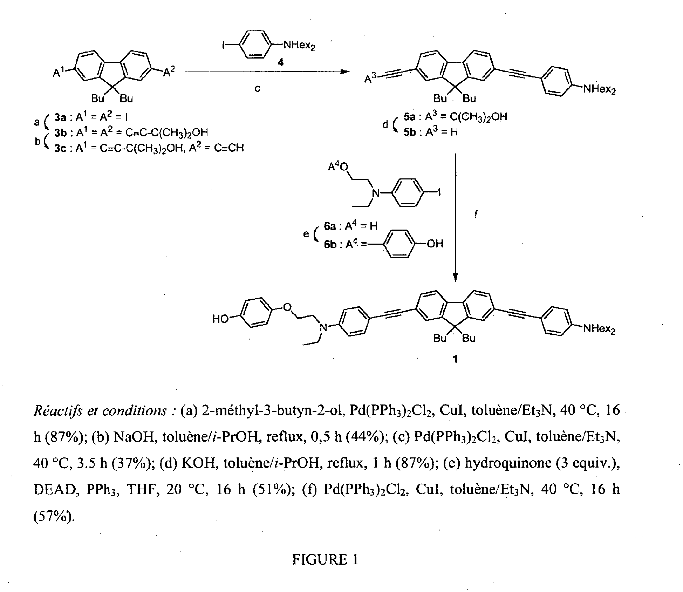

Le chromophore absorbeur à deux photons 1 a été préparé par le procédé indiqué en Figure 1.

Le dialcyne 3b, obtenu à partir du 2,7-diiodo-9,9-dibutyl-9*H*-fluorène 3a, est déprotégé de façon ménagée pour conduire à l'alcyne vrai 3c. Le couplage de Sonogashira de 3c avec le dérivé iodé 4 conduit au composé 5a, dont la déprotection conduit au nouvel alcyne vrai 5b. Ce dérivé est couplé avec un second dérivé iodé (6b), porteur d'une fonction phénol permettant le greffage avec les dendrimères 2-G1,2-G2, 2-G3 et 2-G4.

Plus précisément, les composés 3b,3c,5a,5b 6b et le chromophore 1 ont été obtenus selon les protocoles suivants :
**4,4'-(9,9-Dibutyl-9*H*-fluorène-2,7-diyl)bis(2-méthyl-3-butyn-2-ol) (3b).** L'air est purgé d'une solution de 3a (6.00 g, 11.3 mmol) dans 37.5 mL de toluène/Et₃N (5/1) par bullage d'argon pendant 20 min. Puis du CuI (86 mg, 0.45 mmol), du Pd(PPh₃)₂Cl₂ (316 mg, 0.45 mmol) et du 2-méthyl-3-butyn-2-ol (2.84 g, 33.8 mmol) sont ajoutés, et le mélange est agité à 40 °C pendant 16 h. Après évaporation du solvant sous pression réduite, le produit brut est purifié par chromatographie sur colonne de gel de silice (heptane/CH₂Cl₂ 30:70 puis CH₂Cl₂) pour donner 4.37 g (87%) de 4,4'-(9,9-dibutyl-9*H*-fluorène-2,7-diyl)bis(2-méthyl-3-butyn-2-ol)
**4-(9,9-Dibutyl-7-éthynyl-9*H*-fluorène-2-yl)-2-méthyl-3-butyn-2-ol** (3c). A une solution de 3b (4.02 g, 9.09 mmol) dans 50 mL de toluène/*i*-PrOH (6/1), est ajoutée de à soude en poudre (0.73 g). Le mélange est chauffé à reflux pendant 0.5 h. Après refroidissement, la soude est filtrée et les solvants sont évaporés. Les composés sont séparés par chromatographie sur colonne de gel de silice (heptane/CH₂Cl₂ 70:30 puis 20:80) pour donner 0.66 g (22%) de 9,9-dibutyl-2,7-diéthynyl-9*H*-fluorène et 1.54 g (44%) de 3c.
**[9,9-Dibutyl-7-[2-[4-(dihexylamino)phényl]éthynyl]-9*H*-fluorène-2-yl]-2-méthyl-3-butyn-2-ol (5a).** L'air est purgé d'une solution de 3c (1.304 g, 3.39 mmol) et de 4 (1.71 g, 4.41 mmol) dans 10.8 mL de toluène/Et₃N (5/1) par bullage d'argon pendant 20 min. Puis du Cul (12.9 mg, 0.068 mmol) et du Pd(PPh₃)₂Cl₂ (48 mg, 0.068 mmol) sont ajoutés, et le mélange est agité à 40 °C pendant 3.5 h. Le solvant est évaporé sous pression réduite, et le produit brut est purifié par chromatographie sur colonne de gel de silice (heptane/CH₂Cl₂ 75:25 puis 30:70) pour donner 817 mg (37%) de 5a.
**4-[2-(9,9-Dibutyl-7-éthynyl-9*H*-fluorèn-2-yl)éthynyl]-N,N-dihexylbenzènamine (5b)**. A une solution de 5a (0.798 g, 1.24 mmol) dans 8.75 mL de toluène/i-PrOH (6/1), est ajoutée de la potasse en poudre (0.07 g). Le mélange est chauffé à reflux pendant 1 h. Après refroidissement, la potasse est filtrée et les solvants sont évaporés. Le produit brut est purifié par chromatographie sur colonne de gel de silice (heptane/CH₂Cl₂ 90: 10) pour donner 0.632 g (87%) de 5b.
**4-[2-[Ethyl-(4-iodophényl)amino]éthoxy]phénol (6b)**. A une solution de 6a (5.00 g, 17.2 mmol), d'hydroquinone (5.65 g, 51.3 mmol) et de triphénylphosphine (13.50 g, 51.5 mmol) dans le THF (110 mL), est ajoutée goutte-à-goutte une solution de DEAD (9.00 g, 51.7 mmol) dans le THF (40 mL). Le mélange est agité à 20 °C pendant 16 h et le solvant est évaporé sous pression réduite. Le résidu est purifié par chromatographie sur colonne de gel de silice (CH₂Cl₂) pour donner 3.35 g (51 %) de 6b.
4-[2-[[4-[2-[9,9-Dibutyl-7-[2-[4-(dihexylamino)phényl]éthynyl]-9*H*-fluorèn-2-yl]éthynyl]phényl]éthylamino]éthoxy]phénol (1). L'air est purgé d'une solution de 5b (155.9 mg, 0.266 mmol) et de 6b (132.6 mg, 0.346 mmol) dans 1.2 mL de toluène/Et₃N (5/1) par bullage d'argon pendant 20 min. Puis du CuI (1.0 mg, 0.005 mmol) et du Pd(PPh₃)₂Cl₂ (3.7 mg, 0.005 mmol) sont ajoutés, et le mélange est agité à 40 °C pendant 16 h. Le solvant est évaporé sous pression réduite, et le produit brut est purifié par chromatographie sur colonne de gel de silice (heptane/CH₂Cl₂ 70:30 puis 20:80) pour donner 127.9 mg (57%) de 1

Les dendrimères de formule 2-G1, 2-G2, 2-G3 et 2-G4 ont été préparés suivant le protocole décrit par Launay et al., Journal of Organometallic Chemistry, 1997, 529,51-58.

Des solutions de dendrimères de formule 2-G1, 2-G2, 2-G3 et 2-G4 ont ensuite été mise en contact avec des quantités croissantes de fluorophore de formule 1 en présence de quantités croissantes de Cs₂CO₃.

Pour le composé G1, on a utilisé 12 moles de chromophores et 12 moles de Cs₂CO₃ pour une mole de dendrimère.

Pour le composé G2, on a utilisé 24 moles de chromophores et 24 moles de Cs₂-CO₃ pour une mole de dendrimère.

Pour le composé G3, on a utilisé 48 moles de chromophores et 48 moles de Cs₂-CO₃ pour une mole de dendrimère.

Pour le composé G4, on a utilisé 96 moles de chromophores et 96 moles de Cs₂CO₃ pour une mole de dendrimère.

Plus précisément, les composés G1, G2 ,G 3 et G4 ont été réalisés selon le protocole suivant.

A une solution de dendrimère 2-Gn (n = 1, 44 mg, 24 µmol; n = 2, 58 mg, 12 µmol; n = 3, 70 mg, 6.5 µmol; n = 4, 36 mg, 1.6 µmol) (synthétisé selon la méthode décrite dans Launay et al. J. Organomet Chem. 1997, 529, 51) dans 20 mL de THF distillé, sont additionnés le fluorophore 1 (n = 1, 270 mg, 320 µmol; n = 2, 270 mg, 320 µmol; n = 3, 270 mg, 320 µmol; n = 4, 135 mg, 160 µmol) et Cs₂CO₃ (n = 1, 208 mg, 640 µmol; n = 2, 208 mg, 640 µmol; n = 3, 208 mg, 640 µmol; n = 4, 104 mg, 320 µmol;). Le mélange résultant est agité à température ambiante une nuit, filtré et le solvant est évaporé. Le produit brut est purifié par chromatographie sur colonne (SiO₂; CHCl₃/Hexane : 90 : 10).

On a ainsi obtenu des composés selon la présente invention présentant en guise de couche externe 12, 24, 48 et 96 motifs chromophoriques.

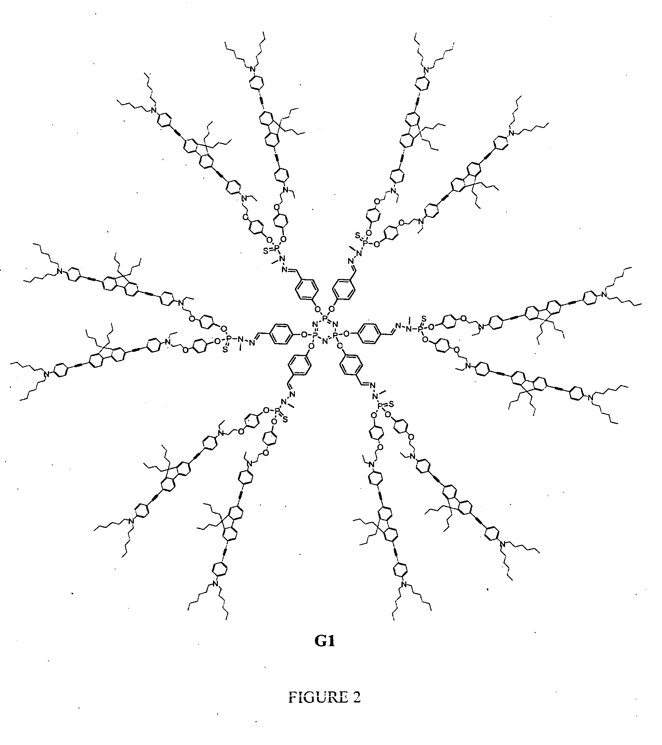

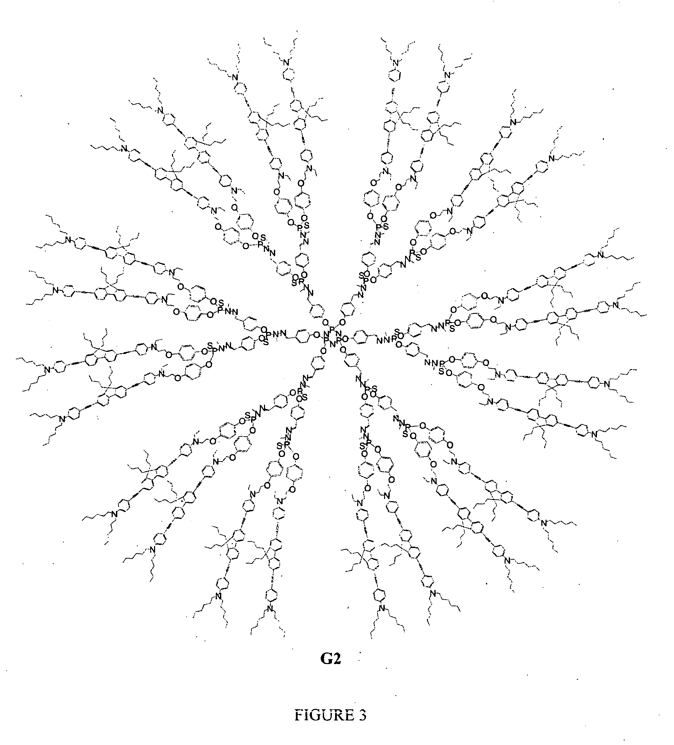

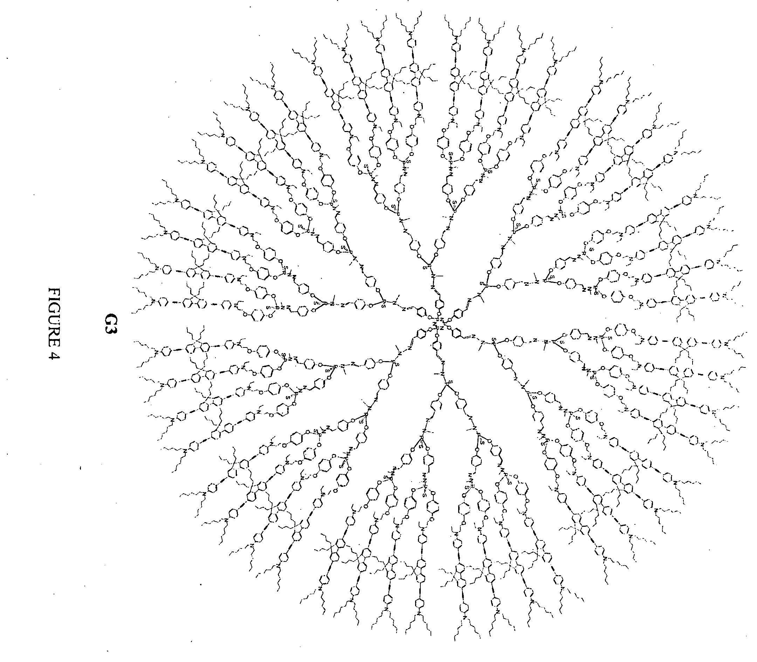

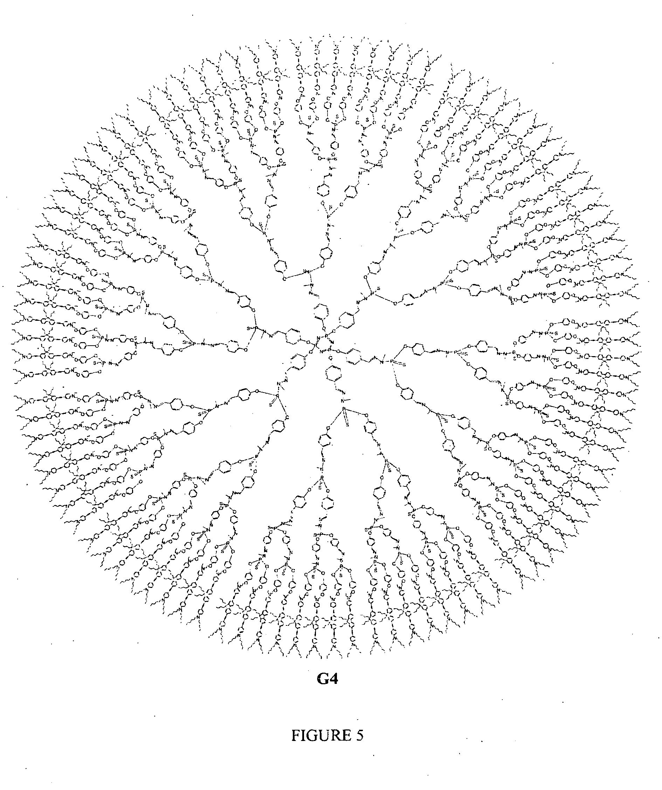

Les formules développées de ces composés sont données en figures 2, 3, 4 et 5.

Les données photophysiques du fluorophore **1** et des composés **G1**, **G2**, **G3** et **G4** dans le toluène ont été évaluées. Les résultats sont donnés dans le tableau 1 ci-après.

**Tableau 1**

| | Nombre de fluorophores | λ_{abs} (nm) | ε (M⁻¹. cm⁻¹) | λₑₘ (nm) | Φ*^{a}* | τ (ns)*^{b}* | *r^{c}* | λ_{ADP}(max) (nm) | σ₂ à λ_{TPA}(max) (GM)*^{d}* |
|---|---|---|---|---|---|---|---|---|---|
| **1** | 1 | 386 | 84900 | 420,444 | 0.83 | 0.67 | 0.178 | 702 | 765 |
| **G1** | 12 | 385 | 1004000 | 423,446 | 0.75 | 0.71 | 0.032 | 701 | 8880 |
| **G2** | 24 | 386 | 2035000 | 426,445 | 0.71 | 0.69 | 0.019 | 701 | 17700 |
| **G3** | 48 | 386 | 3785000 | 441 | 0.62 | 0.71 | 0.013 | 701 | 29800 |
| **G4** | 96 | 386 | 7101000 | 445 | 0.48 | 0.66 | 0.012 | 705 | 55900 |

| | | | | | | | | | |
|---|---|---|---|---|---|---|---|---|---|
| *^{a}* Rendement quantique de fluorescence dans le toluène déterminé par rapport à la fluorescéine dans NaOH 0.1 N. *^{b}* Durée de vie de fluorescence expérimentale. *^{c}* Anisotropie de fluorescence stationnaire. *^{d}* 1 GM = 10⁻⁵⁰ cm⁴.s.photon⁻¹. | | | | | | | | | |

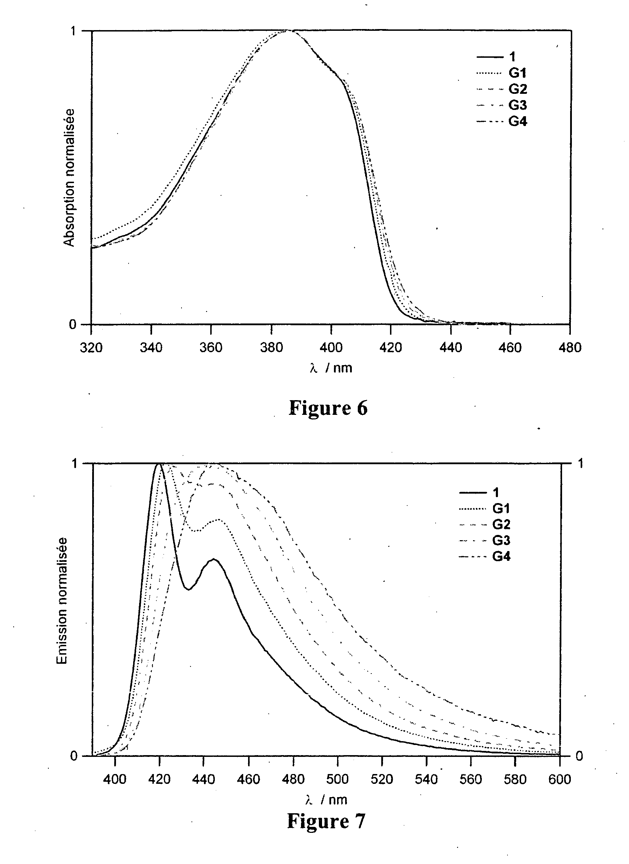

Les composés selon la présente invention présentent une absorption à un photon dans le proche UV. Une augmentation quasi linéaire du coefficient d'extinction molaire avec le nombre de chromophores est observée. Les spectres d'absorption et d'émission dans le toluène sont donnés en Figures 6 et 7.

D'une façon avantageuse, les différents composés dendrimériques conservent des rendements quantiques de fluorescence (Φ) élevés, malgré le grand nombre de chromophores concentrés dans un volume aussi réduit. Ce point est essentiel pour accéder à des brillances élevées.

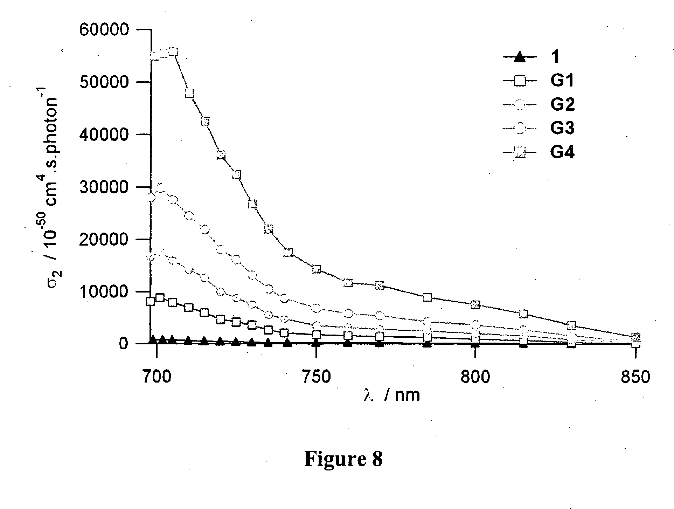

Les spectres d'ADP de ces composés G1, G2, G3 et G4, ainsi que du chromophore 1, ont été déterminés par mesure de la TPEF, à l'aide d'un laser à impulsions femtosecondes dans le toluène. Les spectres d'absorption à deux photons sont donnés en Figure 8.

On observe une augmentation des sections efficaces d'absorption à deux photons avec l'augmentation du nombre de générations du dendrimère. En particulier, une augmentation quasi linéaire est observée avec l'augmentation du nombre de chromophores qui conduit à des valeurs de sections efficaces d'ADP σ₂ pour les dendrimères très élevées. La valeur maximale de section efficace d'ADP obtenue pour le dendrimère G4 (55900 GM à 705 nm) est tout à fait comparable aux sections efficaces d'ADP obtenues pour l'un des meilleurs quantum dots (Larson et al.).

Le composé G4 selon la présente invention présente un diamètre qui peut être estimé à environ 8 nm (les quantum dots présentant quant à eux un diamètre allant jusqu'à 6 nm sans le polymère qui les encapsule).

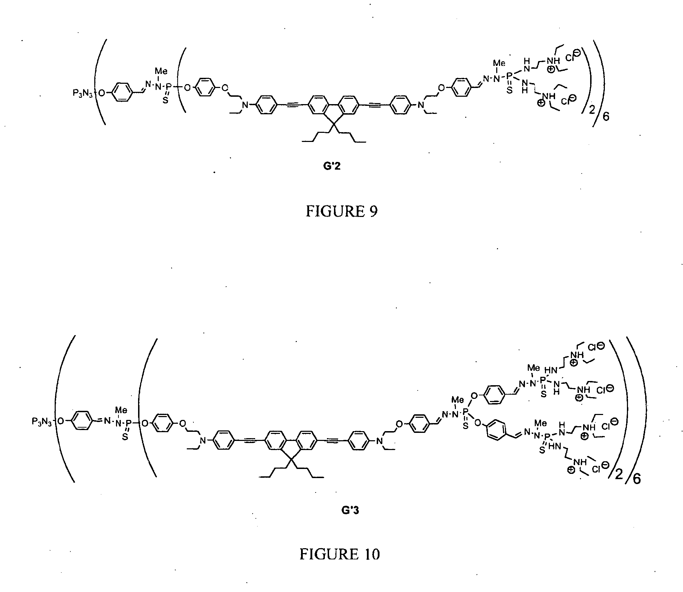

Dans un second mode de réalisation de l'invention, on a réalisé des composés chimiques fluorescents dendrimériques G'2 et G'3 selon celle-ci présentant les formules représentées en Figures 9 et 10.

Ces composés dendrimériques présentent respectivement 2 et 3 générations, à savoir, à partir du noyau :
des motifs X tels que décrit ci-dessus en référence au premier mode de réalisation,
des motifs Y' chromophoriques de formule, 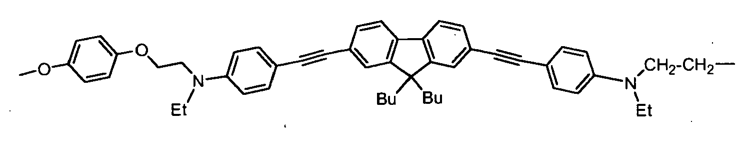
de nouveaux motifs X,
et enfin des groupements ammoniums terminaux susceptibles de conférer au composé une hydrosolubilité.

La présence de motifs X entre les motifs chromophoriques Y' et les groupements ammoniums terminaux offre l'intérêt de former une couche de protection permettant d'isoler les motifs chromophoriques de l'environnement extérieur.

Le composé G'2 a été réalisé de la façon suivante.

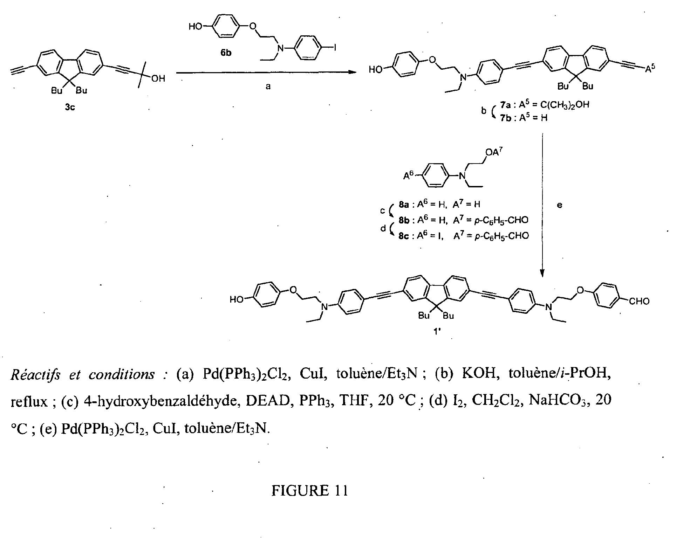

Le chromophore absorbeur à deux photons 1', comportant deux fonctions de greffage à ses extrémités, a été préparé par le procédé indiqué en Figure 11.

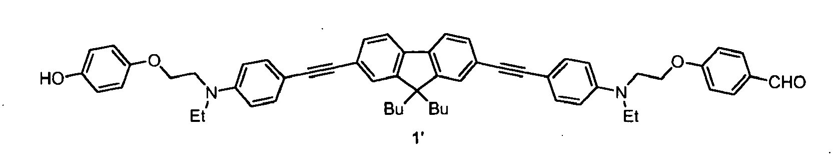

Le couplage de Sonogashira de l'alcyne vrai 3c avec le dérivé iodé 6b conduit au composé 7a, dont la déprotection conduit au nouvel alcyne vrai 7b. Ce dérivé est couplé avec un second dérivé iodé (8c, obtenu en deux étapes à partir du composé commercial 8a) et porteur d'une fonction aldéhyde.

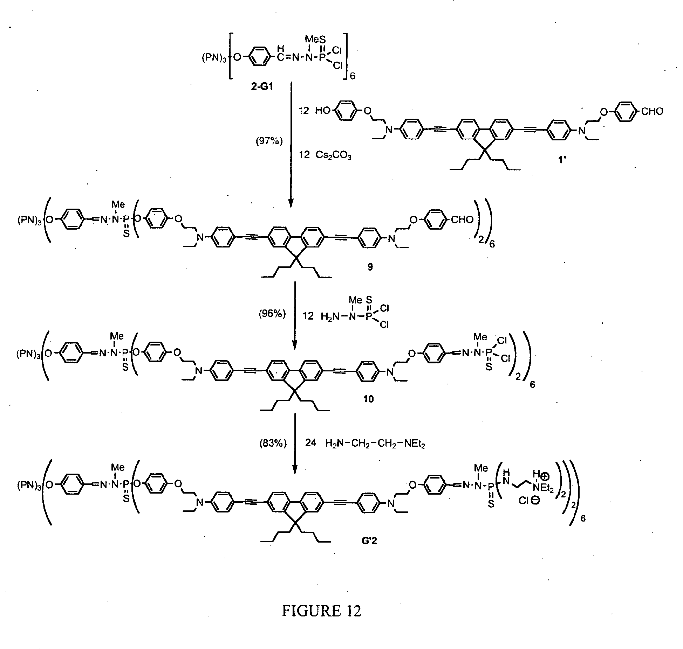

Comme l'indique la Figure 12, la réaction du dendrimère de première génération 2-G1 (synthétisé selon la méthode décrite dans Launay et al. J. Organomet Chem. 1997, 529, 51) avec 12 équivalents du chromophore 1' et 12 équivalents de Cs₂CO₃ conduit au dendrimère 9, avec lequel on fait réagir 12 équivalents de dichlorophosphonométhyl hydrazide (H₂NNMeP(S)Cl₂), pour obtenir le dendrimère 10 de génération 2. Enfin, on fait réagir ce dernier avec 24 équivalents de *N,N-*diéthyléthylènediamine (H₂NCH₂CH₂NEt₂), pour conduire au dendrimère G'2, qui comporte en surface 24 fonctions ammonium.

Plus précisément, les composés 9,10 et G'2 ont été obtenus selon les protocoles suivants.
Composé 9 : A une solution de dendrimère de première génération (16.1 mg, 8.8 µmol), (synthétisé selon la méthode décrite dans Launay et al. J. Organomet Cherra. 1997, 529, 51), dans 20 mL de THF, sont ajoutés le fluorophore (90 mg, 105 µmol) et Cs₂CO₃ (68.5 mg, 210 µmol). Le mélange résultant est agité une nuit à température ambiante, filtré, puis évaporé à sec. Le produit brut est purifié par chromatographie sur colonne de silice (éluant: CH₂Cl₂/Hexane : 98 : 2) et permet d'isoler 99 mg (97 %) de première génération à surface fluorophore.
Composé 10 : A une solution de dendrimère (90 mg, 7.7 µmol) dans 20 mL de THF, est ajoutée une solution de dichlorophosphonométhyl hydrazide (H₂NNMeP(S)Cl₂) (16.7 mg, 93 µmol) dans CHCl₃ à température ambiante. La solution résultante est agitée une nuit à température ambiante, puis la solution est concentrée, précipitée dans du pentane, et le mélange est filtré. La poudre est ensuite lavée par une solution de pentane/éther (1:2) pour donner 101 mg (96 %) de composé de génération 2.
Composé G'2 : A une solution de dendrimère à extrémités P(S)Cl₂ (27 mg, 1.9 µmol) dans 10 mL de THF, est ajoutée une solution de *N,N-*Diéthyléthylènediamine (5.5 mg, 47.9 µmol) sous forte agitation. Après une nuit sous agitation à température ambiante, le précipité est éliminé par filtration et le solvant est évaporé. La poudre ainsi obtenue est lavée avec du THF est séchée sous vide pour obtenir 27 mg (83 %) de dendrimère de génération 2.

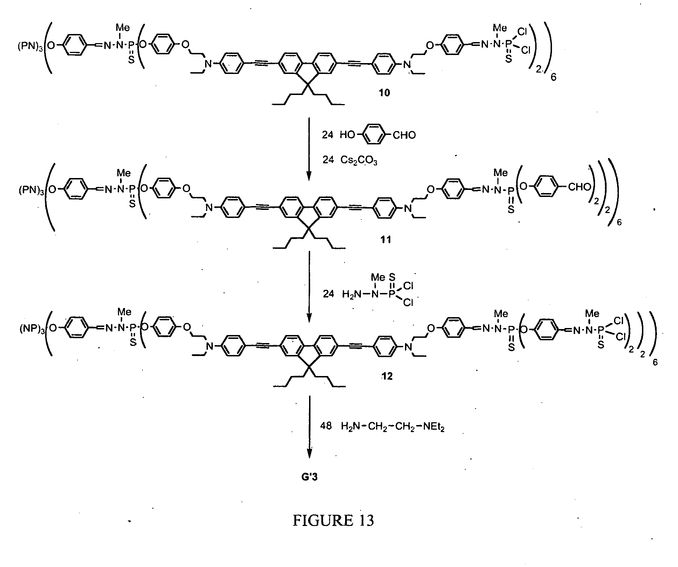

Le composé G'3 a été préparé, comme décrit dans la Figure 13, à partir du dendrimère 10 de génération 2, sur lequel on a fait réagir 24 équivalents de 4-hydroxybenzaldéhyde et 24 équivalents de Cs₂CO₃, pour conduire au dendrimère 11 à 24 fonctions terminales aldéhydes. La réaction de 11 avec 24 équivalents dichlorophosphonométhyl hydrazide (H₂NNMeP(S)Cl₂) permet d'obtenir le dendrimère 12 de génération 3. Enfin, on fait réagir ce dernier avec 48 équivalents de *N,N*-diéthyléthylènediamine (H₂NCH₂CH₂NEt₂), pour conduire au dendrimère G'3, qui comporte en surface 48 fonctions ammonium.

Plus précisément, les composés 11 etG'3 ont été réalisés selon les protocoles suivants.
Composé 11 : A une solution de dendrimère à extrémités P(S)Cl₂ (45 mg, 3.3 µmol) dans 20 mL de THF sont ajoutés le 4-hydroxybenzaldéhyde (9.8 mg, 7.9 µmol) et Cs₂CO₃ (52.1 mg, 160 µmol). La solution hétérogène résultante est agité une nuit à température ambiante. Le solvant est évaporé et la poudre est dissoute dans le chloroforme. La phase organique est lavée par la saumure, séchée sur Na₂SO₄, filtrée et évaporée à sec. La poudre résultante est lavée deux fois à l'éther pour donner 49 mg (95 %) du dendrimère de génération 2.
Composé G'3 :A une solution de dendrimère de génération 2 à extrémités aldéhydes (45 mg, 2.9 µmol) dans 20 mL de THF, est ajoutée une solution de dichlorophosphonométhyl hydrazide (H₂NNMeP(S)Cl₂) (12.4 mg, 69.3 µmol) dans CHCl₃ à température ambiante. La solution résultante est agitée 25 minutes, puis concentrée, précipitée dans du pentane, et le mélange est filtré. La poudre est ensuite lavée par une solution de pentane/éther (1:2) pour donner 54 mg (96%) du dendrimère de génération 3.

Dans un troisième mode de réalisation de l'invention, on a réalisé des composés chimiques fluorescents dendrimériques G"1 et G"2 selon celle-ci présentant les formules :

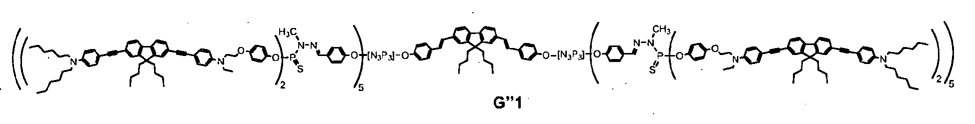

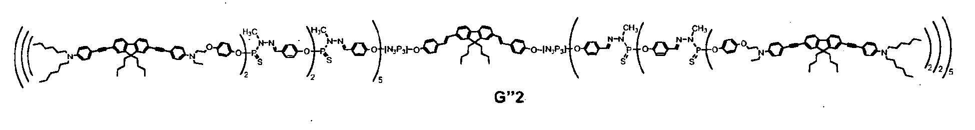

Ces composés dendrimériques présentent respectivement 1 et 2 générations.

Dans le composé G"1, 10 motifs X sont directement liés au noyau et 20 motifs Y sont reliés à ceux-ci. Les motifs Y forment une génération du composé.

Dans le composé G"2, 10 premiers motifs X sont directement liés au noyau, et 20 motifs X sont liés à ces premiers motifs pour former respectivement 1 génération du composé et 40 motifs Y appartiennent à la génération « externe » du chaque composé.

Ces composés présentent un noyau à 10 valences de formule : 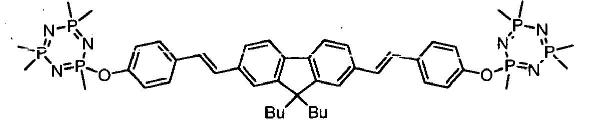 des chaînes de génération non chromophoriques en arborescence autour du noyau (motifs X) de formule : 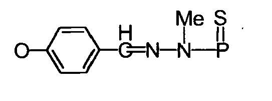 et des motifs chromophoriques (motifs Y) de formule :

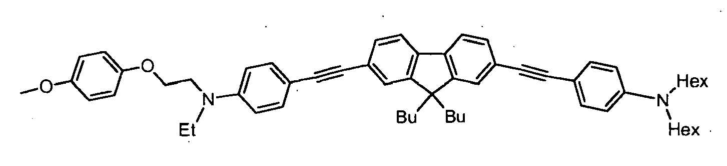

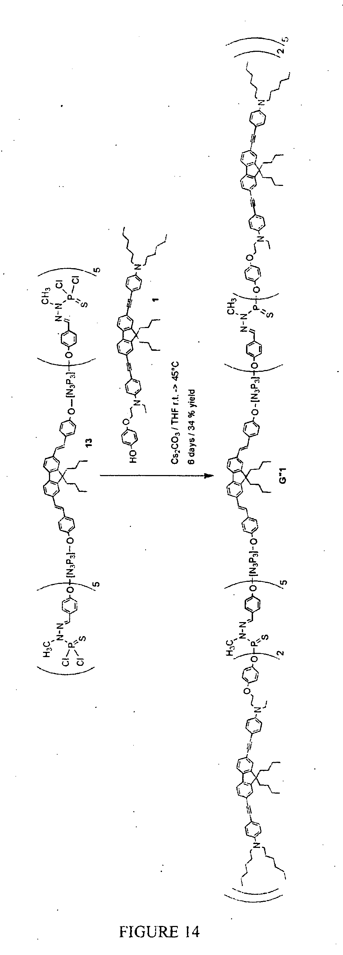

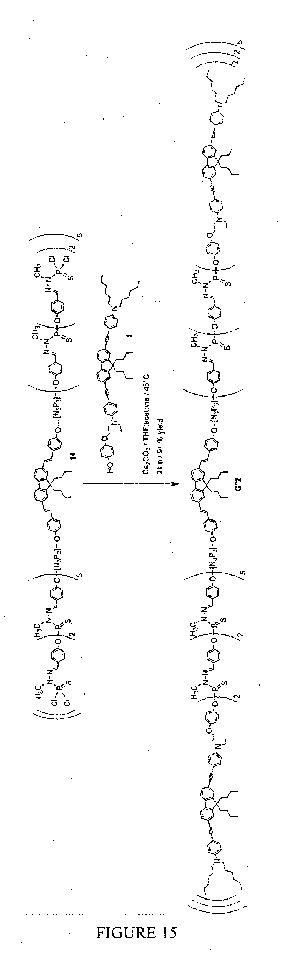

Comme l'indiquent les figures 14 et 15, ces deux composés selon l'invention ont été synthétisés en faisant réagir des dendrimères de formules 13 et 114 (préparés selon la méthode décrite dans Krishna et al. Angew. Chem. Int. Ed. 2006, 45, 4645) avec des quantités croissantes de chromophore absorbeur à deux photons de formule 1 par substitution nucléophile des groupes P(S)Cl₂ terminaux.

Plus précisément, les composés G"1 et G"2 ont été réalisés selon le protocole suivant.
Composé G"1 : Le dendrimère 13 (0.010g, 2.83 µmol), le fluorophore 1 (0.049g, 58.2 µmol), le carbonate de césium (0.038, 113.94 µmol) et le tétrahydrofuranne (7 mL) sont introduits dans un Schlenck de 50 mL, et agités à température ambiante pendant 15 h, puis à 45 °C pendant 6 jours. Les sels sont filtrés et le solvant est évaporé lorsque la réaction est terminée (suivi par RMN ³¹P). Le produit est purifié par colonne chromatographique (Florisil®, CHCl₃ à THF:CH₃OH comme mélanges éluants), puis par lavages avec du diéthyléther, pour conduire au dendrimère G"1 (0.0191 g, 34% de rendement).
Composé G"2 : Le dendrimère 14 (0.078g, 0.91 µmol), le fluorophore 1 (0.031g, 36.48 µmol), le carbonate de césium (0.026g, 78.09 µmol) et un mélange acétone:THF 1:1 (6 mL) sont introduits dans un Schlenck de 50 mL, et agités à 45 °C pendant 21 h. Les sels sont filtrés et le solvant est évaporé lorsque la réaction est terminée (suivi par RMN ³¹P). Le solide orange obtenu est lavé de façon répétée avec du diéthyléther jusqu'à ce qu'il ne reste plus de trace de fluorophore 1. Le solide est alors repris dans du dichlorométhane, filtré et le solvant est évaporé pour conduire au dendrimère G"2 (0.034g, 91% de rendement).

Les données photophysiques des composés **G"1** et **G"2** dans le toluène ont été évaluées. Les résultats sont donnés dans le tableau 2 ci-après.

**Tableau 2**

| | Nombre de fluorophores | λ_{abs} / nm | ε / M⁻¹ cm⁻¹ | λ_{cm} / nm | Φ*^{a}* | τ/ns*^{b}* | σ₂ at λ_{TPA}(max) /GM*^{c}* |
|---|---|---|---|---|---|---|---|
| **G"1** | 20 | 382 | 1 537 000 | 444 | 0.11 | 0.71 | 14 300 |
| **G"2** | 40 | 384 | 3 000 000 | 445 | 0.26 | 0.65 | 32 800 |

| | | | | | | | |
|---|---|---|---|---|---|---|---|
| *^{a}* Rendement quantique de fluorescence dans le toluène déterminé par rapport à la fluorescéine dans NaOH 0.1 N. *^{b}* Durée de vie de fluorescence expérimentale. *^{c}* 1GM = 10⁻⁵⁰ cm⁴.s.photon⁻¹. | | | | | | | |

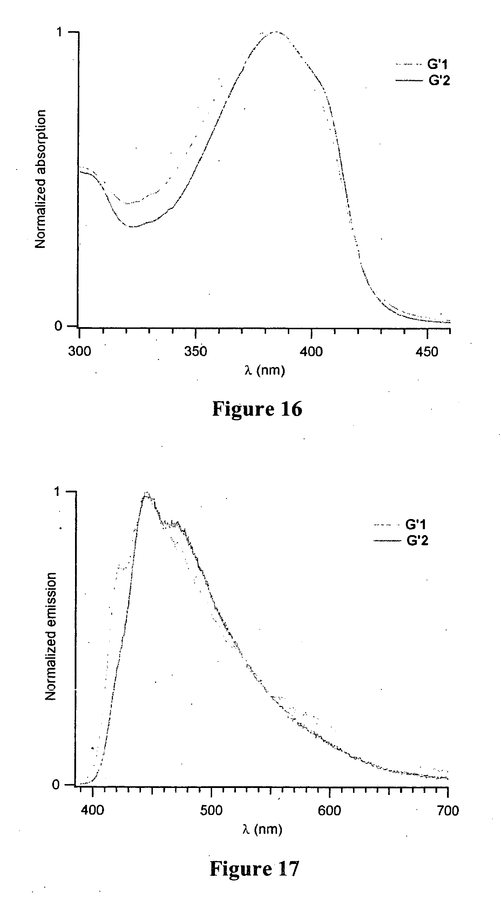

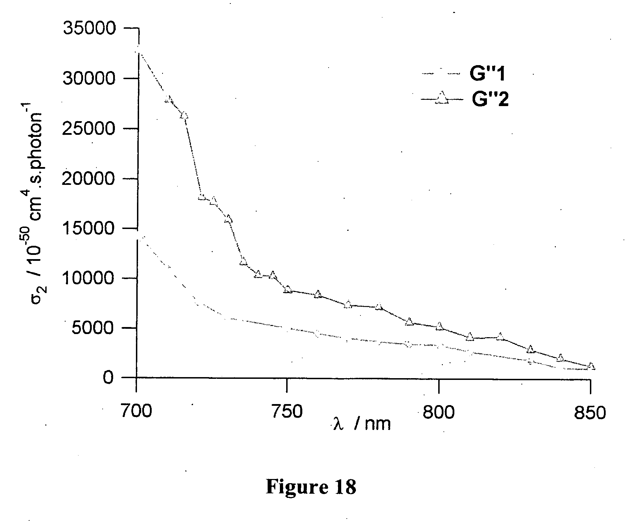

Les spectres d'absorption et d'émission dans le toluène de ces deux composés sont donnés en Figures 16 et 17, et leurs spectres d'absorption à deux photons en Figure 18.

L'utilisation d'un noyau à 10 valences permet d'accéder en moins d'étapes de synthèse à des dendrimères possédant un grand nombre de fluorophores et des sections efficaces d'absorption à deux photons très élevées. Le dendrimère G"2 de génération 2 présente ainsi des sections efficaces d'ADP σ₂ supérieures à celle du dendrimère G3 de génération 3 de la série à noyau de 6 valences. On observe par contre que la nature et la géométrie du noyau à dix valences conduisent à des rendements quantiques de fluorescence (Φ) moins élevés que ceux des dendrimères possédant un noyau à 6 valences. Toutefois, on observe que de façon avantageuse, ce rendement quantique Φ augmente avec la génération du dendrimère.

Les modes de réalisation de l'invention ici décrits ne sont nullement limitatifs. Il pourra notamment être envisagé de greffer sur les composés d'autres types de groupements fonctionnels autorisant leur hydrosolubilité. Il pourra notamment s'agir de groupements pyridiniums, carboxylates, sulfonates, ou bien encore de chaînes polyéthylèneglycol. Il pourra aussi s'agir de greffer d'autres types de groupements fonctionnels que ceux autorisant leur hydrosolubilité. Ces groupements pourront être greffés sur une autre génération que la génération formant la couche externe des composés.

Les composés pourront intégrer des groupements chromophoriques ou non chromophoriques de plusieurs natures au sein du même composé.

La ou les couches de motifs chromophoriques pourront être internes ou externes.

Les composés pourront ou non présenter une génération ou plusieurs générations externe de protection des motifs chromophoriques.

Les composés selon l'invention pourront présenter plusieurs noyaux générant chacun une arborescence de motifs chromophoriques et non chromophoriques et reliés entre eux soit directement soit par l'intermédiaire de motifs chromophoriques ou non chromophoriques.

## Revendications

1. Composé chimique fluorescent constitué par un dendrimère de n génération(s), n étant un entier non nul, montrant :
- au moins un noyau central (N) de valence m choisi dans le groupe constitué par 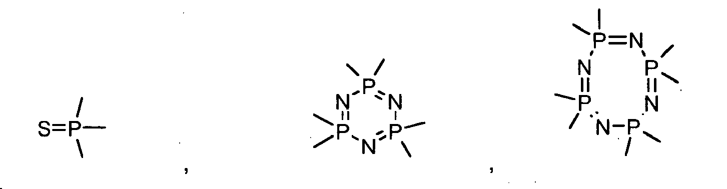 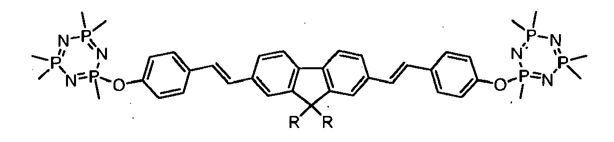 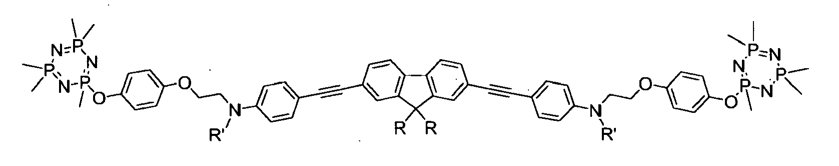 R et R', identiques ou différents, désignant un radical choisi dans le groupe constitué par l'hydrogène et les radicaux alkyles en C₁ à C₂₅, préférentiellement en C₁ à C₁₂.
- au moins un premier motif (X) non chromophorique de valence m' choisi dans le groupe constitué par : 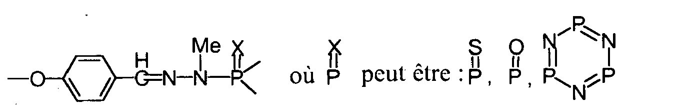 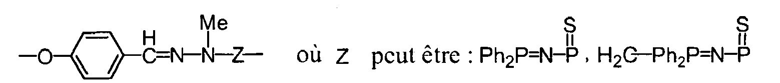 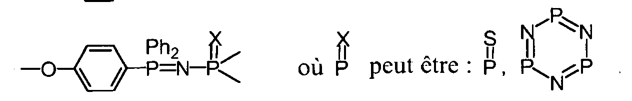 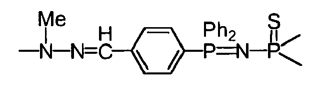 m motifs (X) étant directement reliés audit noyau central (N) et/ou x motifs formant au moins une génération dudit dendrimère ; et,
- au moins un deuxième motif (Y) présentant des propriétés d'absorption à deux photons, de valence m", m motifs (Y) étant directement reliés audit noyau central (N) et/ou y motifs (Y), appartenant à, ou formant au moins une génération dudit dendrimère, ledit motif chromophorique (Y) étant constitué d'un radical chromophorique multiphotonique (Y1) lié à au moins un appendice de greffage (Y2),
• ledit radical chromophorique (Y1) répondant à l'une des deux structures suivantes : 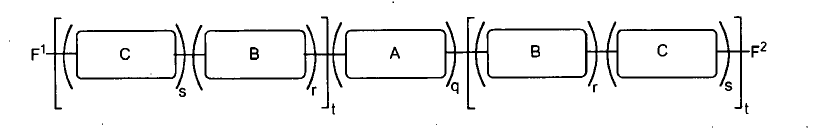 ou 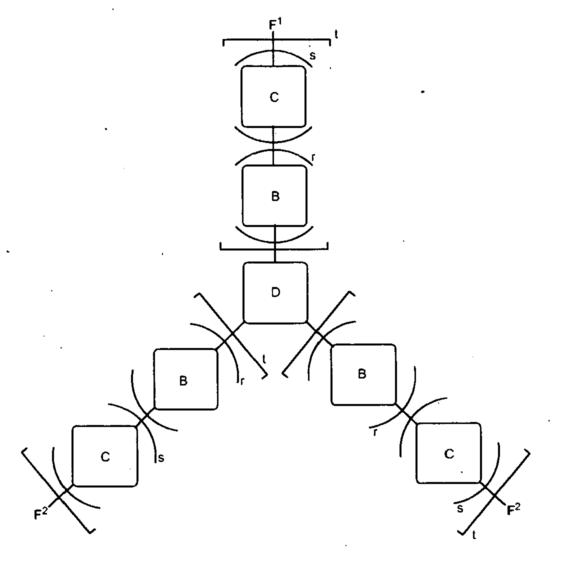
dans lesquelles F¹ et F², identiques ou différents, désignent un groupement électroactif (donneur ou accepteur d'électrons), F¹ étant lié à un appendice de greffage, et F² étant lié à 0, 1 ou 2 appendices de greffages, F¹ et F² étant préférentiellement choisis parmi : 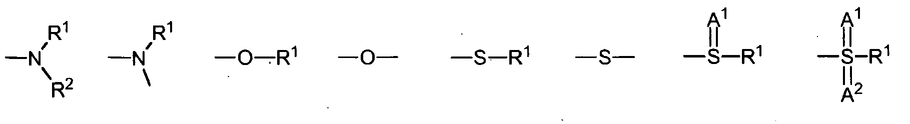
R¹ et R², identiques ou différents, désignant soit un appendice de greffage (Y2), soit un radical choisi dans le groupe constitué par l'hydrogène, les radicaux alkyles en C₁ à C₂₅, préférentiellement en C₁ à C₁₂, (CH₂)ₘ₁-SO₃M, (CH₂)ₘ₁NAlk₃⁺, (CH₂)ₘ₁-(OCH₂-CH₂)ₚ-OH, M étant un métal alcalin et m1 étant égal à 0 ou étant un entier compris entre 1 et 12, préférentiellement entre 1 et 6, p étant un entier compris entre 1 et 25 ;
A¹ et A², identiques ou différents, représentant O, NH, NAlk, NCF₃ ;
et dans lesquelles, 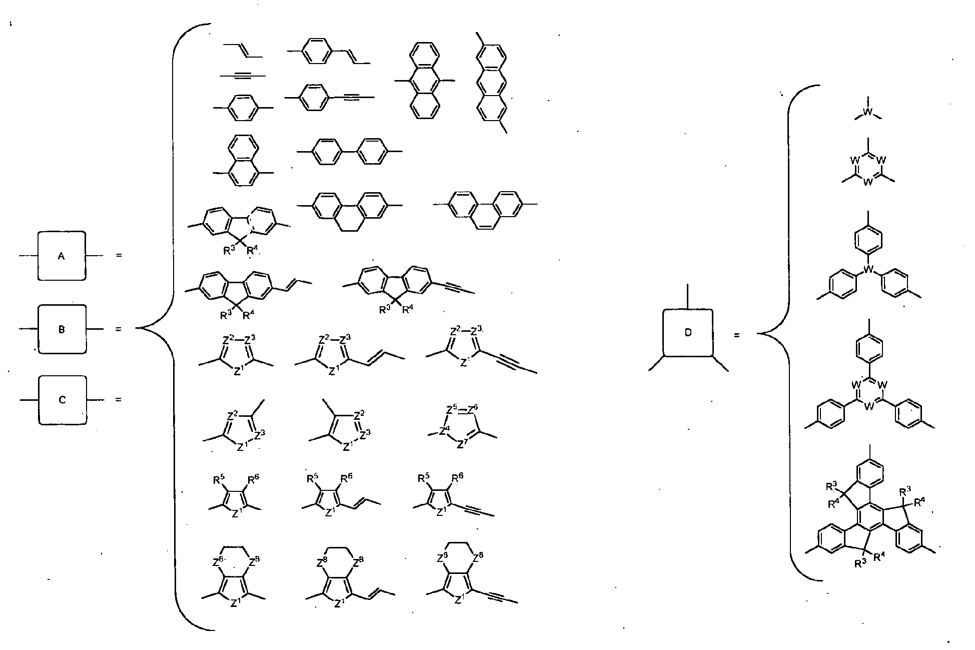
R³ et R⁴, identiques ou différents, désignent un radical choisi dans le groupe constitué par l'hydrogène, les radicaux alkyles en C₁ à C₂₅, préférentiellement en C₁ à C₁₂, (CH₂)ₘ₁-SO₃M, (CH₂)ₘ₁NAlk₃⁺, (CH₂)ₘ₁-(OCH₂-CH₂)ₚ-OH, M étant un métal alcalin et m1 étant égal à 0 ou étant un entier compris entre 1 et 12, préférentiellement entre 1 et 6, p étant un entier compris entre 1 et 25 ;
R⁵ et R⁶, identiques ou différents représentant chacun un radical OH, OAlk, OAr, SH, SAlk, SAr ;
Z¹, représentant O, S, NH, NAlk, NAr, PH, PAlk ou PAr ;
Z², Z³ représentant chacun CH, CAlk ou N ;
Z⁴ représentant N ou P ;
Z⁵, Z⁶, Z⁷ représentant chacun CH, CAlk ou N ;
Z⁸ représentant O ou S ;
q étant un entier compris entre 1 et 7 ;
r étant un entier compris entre 1 et 7 ;
s étant un entier compris entre 0 et 7 ;
t étant un entier compris entre 1 et 7.
W étant CH ou B ou N ou P ou PO,
et,
• ledit appendice de greffage (Y2) étant choisi parmi : 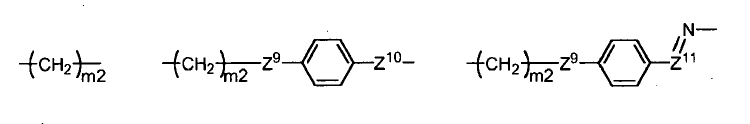 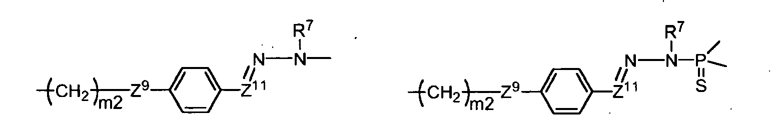
m2 étant un entier compris entre 0 et 12, préférentiellement entre 0 et 6 ;
Z⁹ et Z¹⁰, identiques ou différents, représentant O, S, NH, NAlk, NAr ;
Z¹¹, représentant CH, CAlk, CAr, PAlk₂, PAr₂

2. Composé selon la revendication 1 **caractérisé en ce que** n est supérieur à 3.

3. Composé selon l'une quelconque des revendications 1 ou 2 **caractérisé en ce que** ledit noyau (N) est

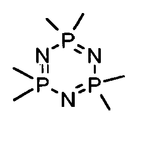

4. Composé selon l'une des revendications 1 à 3 **caractérisé en ce que** ledit motif (Y) est choisi dans le groupe constitué par : 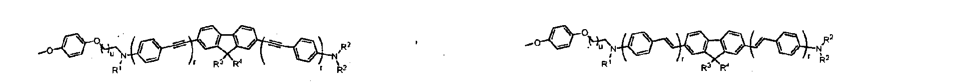 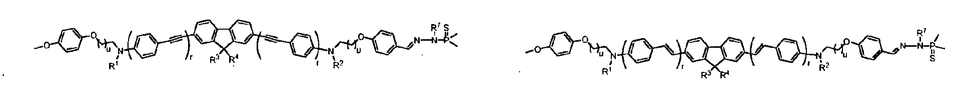 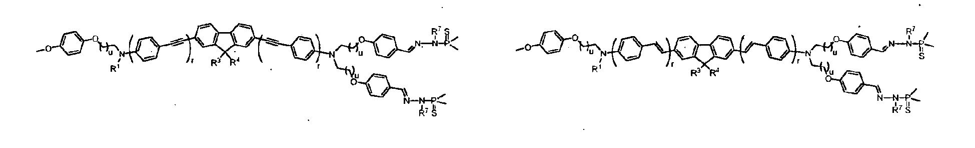
R¹, R², R³, R⁴, R⁷ et r ayant la même signification que précédemment ;
u étant un entier compris entre 1 et 11, préférentiellement entre 1 et 5.

5. Composé selon l'une quelconque des revendications précédentes **caractérisé en ce que** ledit dendrimère montre au moins un troisième motif (Z) formant la couche extérieure de la génération Gn dudit dendrimère et présentant des propriétés de solubilisation du dendrimère soit dans l'eau, soit dans des solvants organiques.

6. Composé selon la revendication précédente **caractérisé en ce que** ledit motif (Z) est un motif ammonium ou pyridinium ou carboxylate ou sulfonate ou une chaîne polyéthylèneglycol.

7. Composé selon la revendication 5 ou 6 **caractérisé en ce qu'**il répond à l'une quelconque des formules :

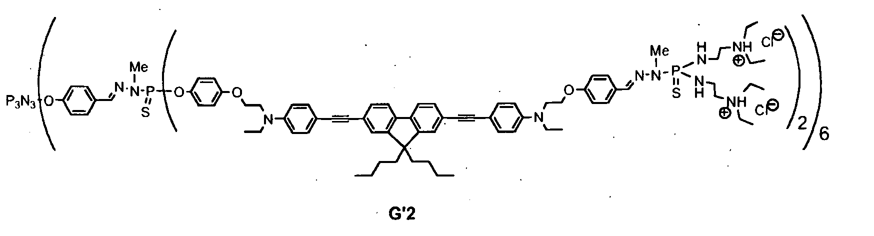

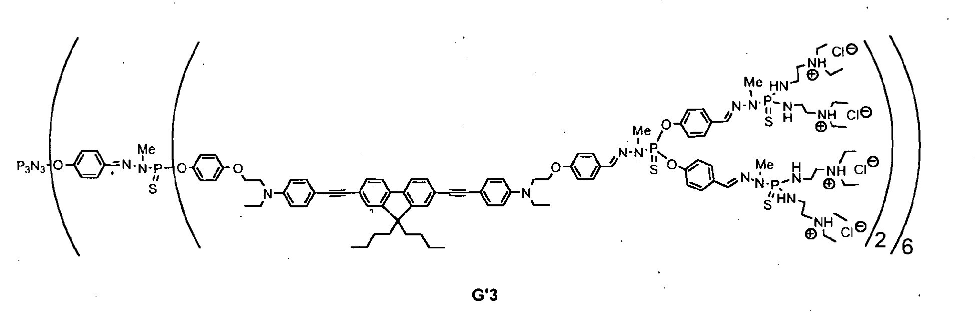

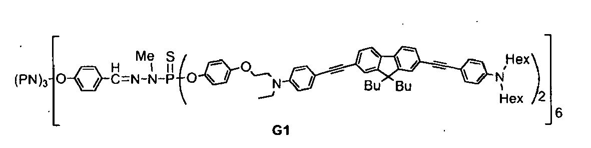

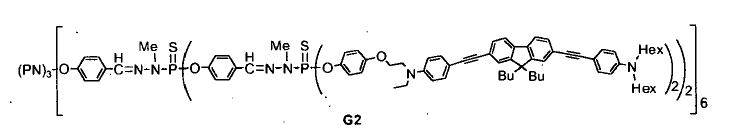

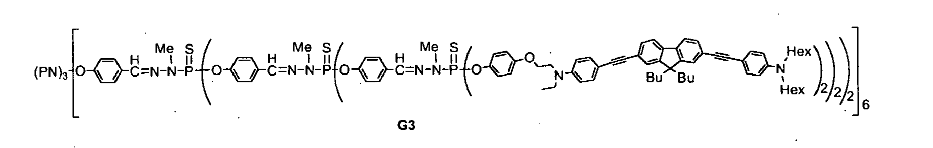

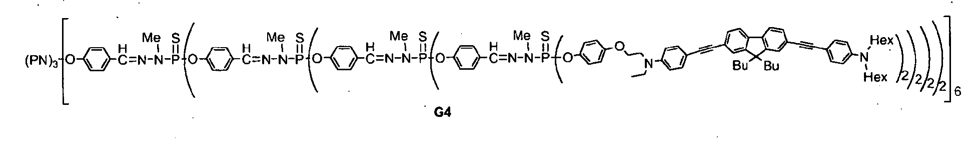

8. Composé selon la revendication 5 ou 6 **caractérisé en ce qu'**il répond à l'une quelconque des formules :

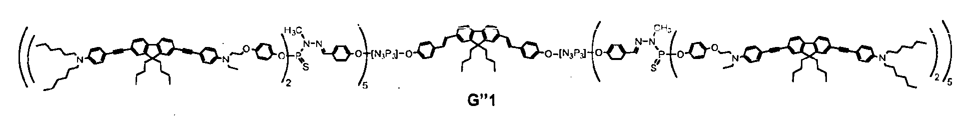

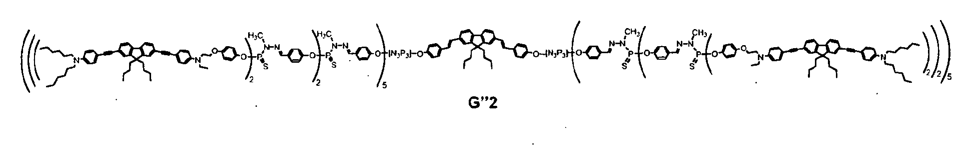

9. Composé selon l'une quelconque des revendications précédentes **caractérisé en ce qu'**il présente deux noyaux de valences identiques ou différentes, liés directement l'un à l'autre ou liés entre eux par l'intermédiaire d'un motif (Y) présentant des propriétés d'absorption à deux photons.

10. Composé selon l'une quelconque des revendications précédentes **caractérisé en ce qu'**il présente au moins deux types de motifs (Y,Y') présentant des propriétés d'absorption à deux photons.

11. Composé selon la revendication 10 **caractérisé en ce que** les différents types de motifs présentant des propriétés d'absorption à deux photons possèdent des propriétés d'émission de longueur d'ondes différentes.

12. Composé selon la revendication 11 **caractérisé en ce que** les différents types de motifs présentant des propriétés d'absorption à deux photons possèdent des propriétés d'émission de longueur d'ondes différentes dont la somme concourre à l'émission d'une lumière blanche.

13. Utilisation d'un composé selon l'une quelconque des revendications 1 à 12 dans tout procédé ou dispositif d'imagerie photonique, de diagnostic, de photothérapie ou de thérapie photodynamique mettant en oeuvre une absorption à un, deux ou trois photons.

14. Utilisation selon la revendication 13 dans le cadre d'un procédé ou d'un dispositif biphotonique.

15. Utilisation selon la revendication 13 ou 14 dans le cadre d'un procédé ou d'un dispositif d'imagerie photonique.

## Claims

1. Fluorescent chemical compound formed by a dendrimer of n generation(s), in which n is a non-zero integer, having:
- at least one central core (N) of valence m chosen from the group consisting of: 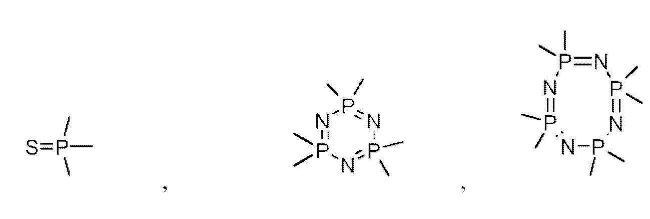 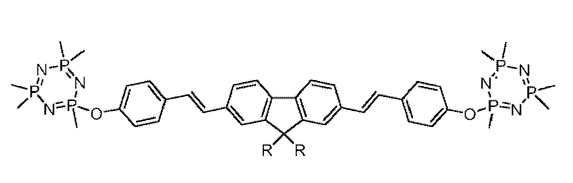 or 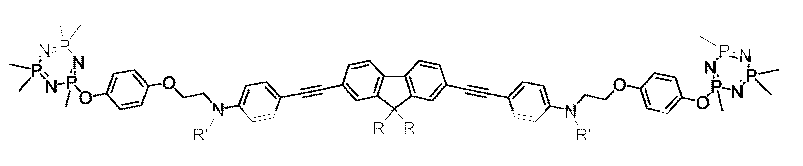 R and R', identical or different, referring to a radical chosen from the group consisting of hydrogen, C₁ to C₂₅ alkyl radicals, preferably C₁ to C₁₂.
- at least one first non-chromophoric unit (X) of valence m' chosen from the group consisting of: 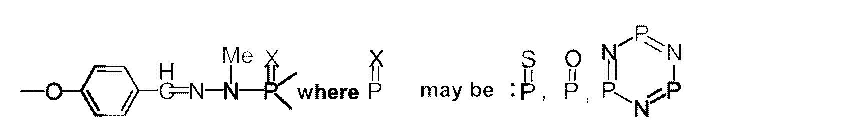 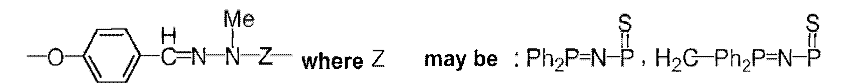 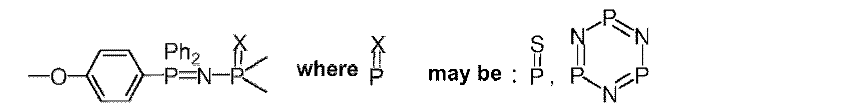 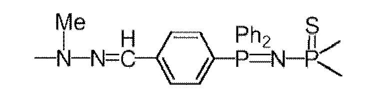 m units (X) being directly bound to said central core (N) and/or x units forming at least one generation of said dendrimer; and
- at least one second unit (Y) having two-photon absorption properties, of valence m", m units (Y) being directly bound to said central core (N) and/or y units (Y), belonging to, or forming at least one generation of said dendrimer, in which said chromophoric unit (Y) is formed by a multiphoton chromophoric radical (Y1) bound to at least one grafting appendix (Y2).
- in which said chromophoric radical (Y1) has one of the following two structures: 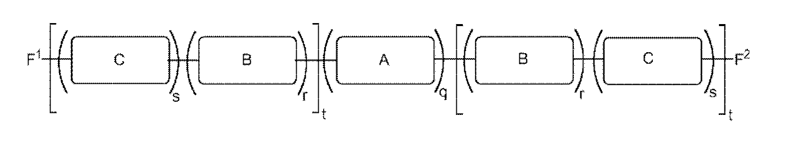 or 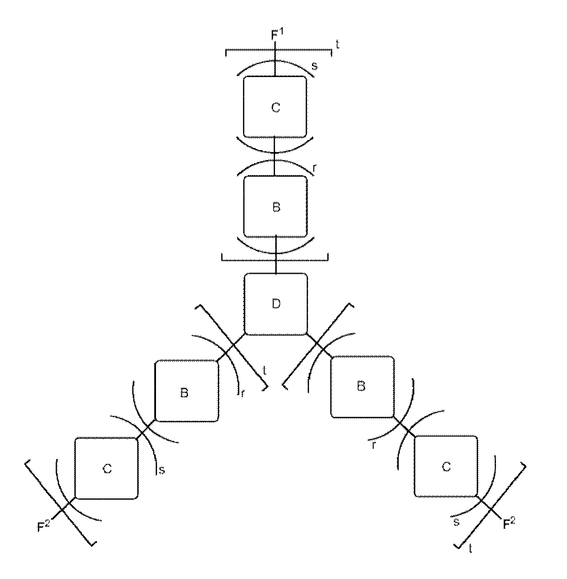
in which F¹ and F², are identical or different, and refer to an electroactive groups (electron donor or acceptor), with F¹ being bound to a grafting appendix and F² being bound to 0, 1 or 2 grafting appendix, and F¹ and F² preferably being chosen from: 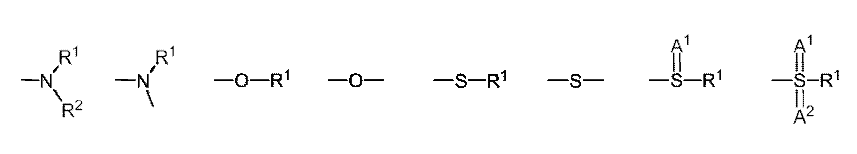
R¹ and R², are identical or different, and either refer to a grafting appendix (Y2), or a radical chosen from the group consisting of hydrogen, C₁ to C₂₅ alkyl radicals, preferably C₁ to C₁₂, (CH₂)ₘ₁-SO₃M, (CH₂)ₘ₁NAlk₃⁺, (CH₂)ₘ₁-(OCH₂-CH₂)ₚ-OH, with M being an alkaline metal and m1 being equal to 0 or being an integer between 1 and 12, preferably between 1 and 6, and p being an integer between 1 and 25;
A¹ and A², identical or different, representing O, NH, NAlk, NCF₃;
and in which, 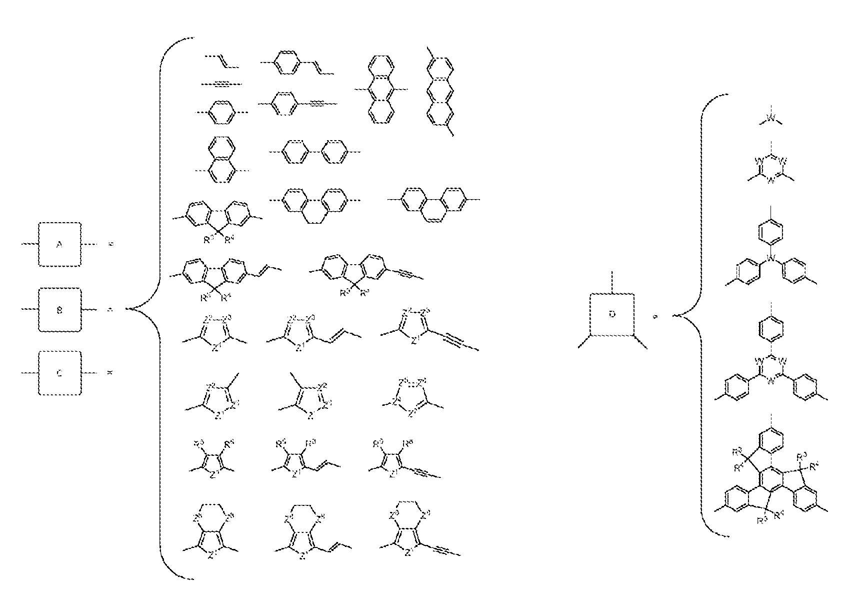
R³ and R⁴, are identical or different, and refer to a radical chosen from the group consisting of hydrogen, C₁ to C₂₅ alkyl radicals, preferably C₁ to C₁₂, (CH₂)ₘ₁-SO₃M, (CH₂)ₘ₁NAlk₃⁺, (CH₂)ₘ₁-(OCH₂-CH₂)ₚ-OH, with M being an alkaline metal and m1 being equal to 0 or being an integer between 1 and 12, preferably between 1 and 6, and p being an integer between 1 and 25;
R⁵ and R⁶, are identical or different, each representing an OH, OAlk, OAr, SH, SAlk, or SAr radical;
Z¹, representing O, S, NH, NAlk, NAr, PH, PAlk or PAr;
Z², Z³ each representing CH, CAlk or N;
Z⁴ representing N or P;
Z⁵, Z⁶, Z⁷ each representing CH, CAlk or N;
Z⁸ representing O or S;
q being an integer between 1 and 7;
r being an integer between 1 and 7;
s being an integer between 0 and 7;
t being an integer between 1 and 7;
W being CH or B or N or P or PO,
and,
- said grafting appendix (Y2) is chosen from; 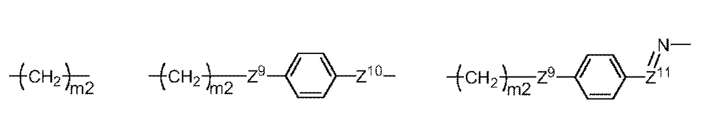 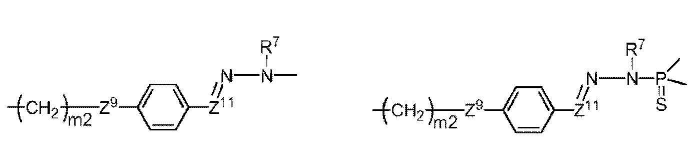
with m2 being an integer between 0 and 12, preferably between 0 and 6;
Z⁹ and Z¹⁰, being identical or different, and representing 0, S, N, NAlk, and NAr; and
Z¹¹, representing CH, CAlk, CAr, PAlk₂, and PAr₂.

2. Compound according to claim 1, **characterized in that** n is greater than 3.

3. Compound according to either one of claims 1 or 2, **characterized in that** said core (N) is

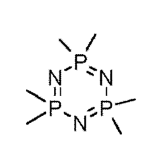

4. Compound according to one of claims 1 to 3, **characterized in that** said unit (Y) is chosen from the group consisting of: 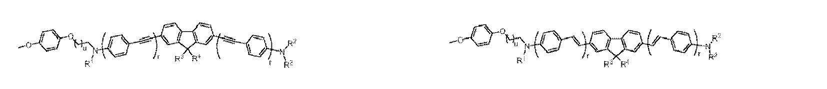 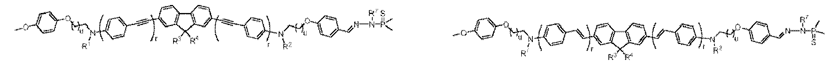 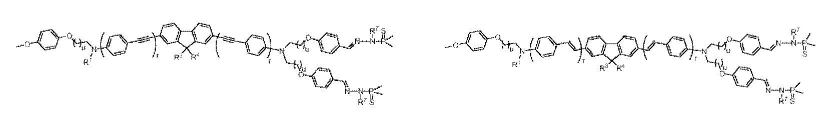
in which R¹, R², R³, R⁴, R⁷ and r have the same meaning as above; and
u is an integer between 1 and 11, preferably between 1 and 5.

5. Compound according to any one of the previous claims, **characterized in that** said dendrimer has at least one third pattern (Z) forming the external layer of the generation Gn of said dendrimer and presenting solubilization properties of the dendrimer either in water or in organic solvents.

6. Compound according to the previous claim, **characterized in that** said pattern (Z) is an ammonia or pyridinium or carboxylate or sulfonate pattern or a polyethyleneglycol chain.

7. Compound according to claim 5 or 6, **characterized in that** it satisfies any one of the following formulas:

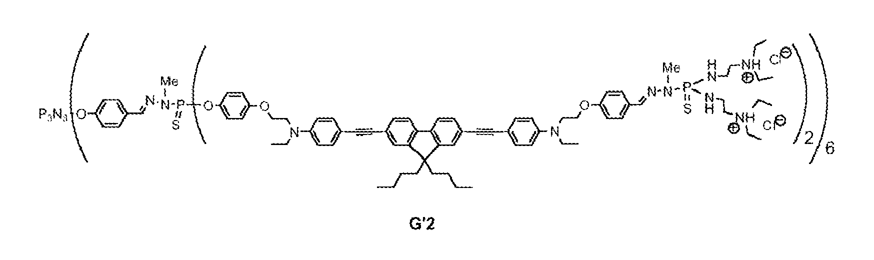

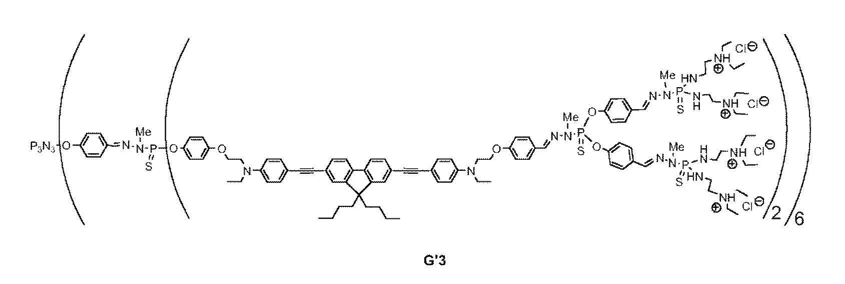

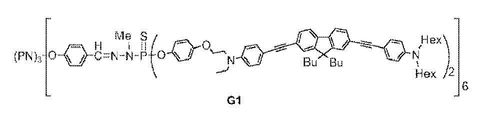

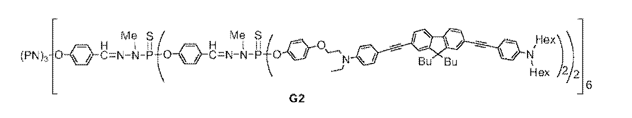

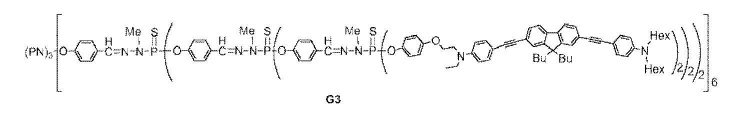

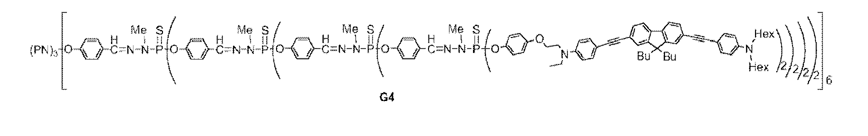

8. Compound according to claim 5 or 6, **characterized in that** it has either one of the following formulas;

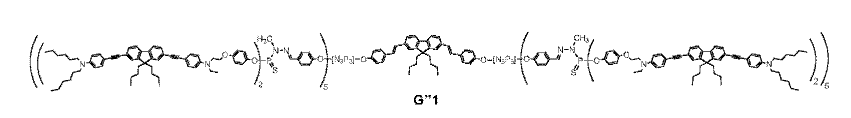

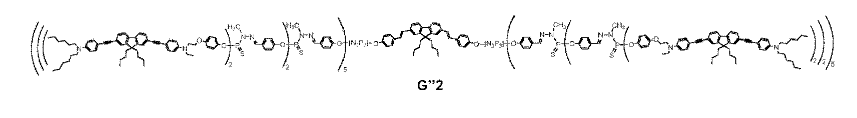

9. Compound according to any one of the previous claims, **characterized in that** it has two cores with identical or different valences, bound directly to one another or bound to one another by means of a unit (Y) having two-photon absorption properties.

10. Compound according to any one of the previous claims, **characterized in that** it has at least two types of units (Y, Y') having two-photon absorption properties.

11. Compound according to claim 10, **characterized in that** the various types of units having two-photon absorption properties have different wavelength emission properties,

12. Compound according to claim 11, **characterized in that** the various types of units having two-photon absorption properties have different wavelength emission properties, the sum of which contributes to the emission of a white light.

13. Use of a compound according to any one of claims 1 to 12 in any photon imaging, photon diagnostic, phototherapy or photodynamic therapy process or device implementing a one-, two- or three-photon absorption.

14. Use according to claim 13 in the context of a biphotonic process or device.

15. Use according to claim 13 or 14 in the context of a photon imaging process or device.

## Patentansprüche

1. Fluoreszierende chemische Verbindung, die aus einem Dendrimer mit n Generation(en) besteht, wobei n eine Ganzzahl ungleich Null ist, wobei die Verbindung Folgendes aufweist:
- mindestens einen zentralen Kern (N) mit der Valenz m, ausgewählt aus der Gruppe bestehend aus: 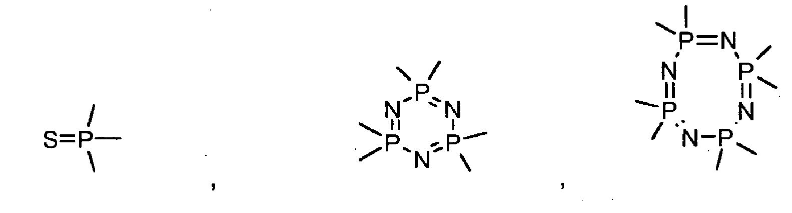 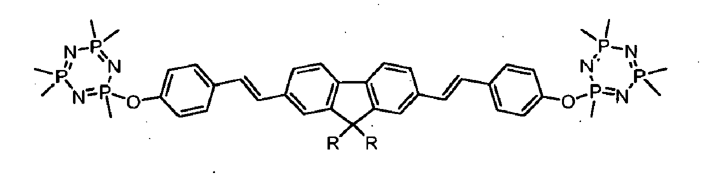 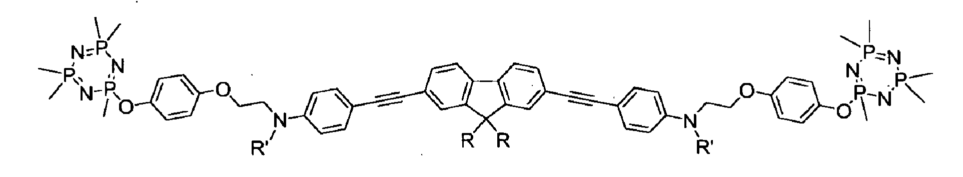 , wobei R und R', die identisch oder verschieden sind, ein Radikal bezeichnen, ausgewählt aus der Gruppe bestehend aus Wasserstoff und den Alkylradikalen von C₁ bis C₂₅, vorzugsweise von C₁ bis C₁₂,.
- mindestens ein erstes nicht chromophores Motiv (X) mit der Valenz m', ausgewählt aus der Gruppe bestehend aus: 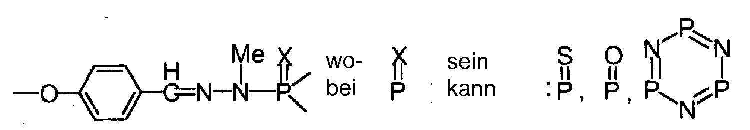 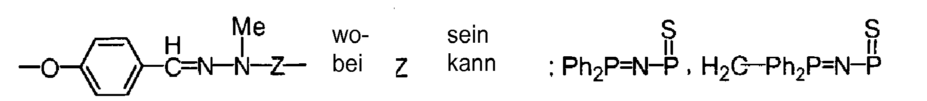 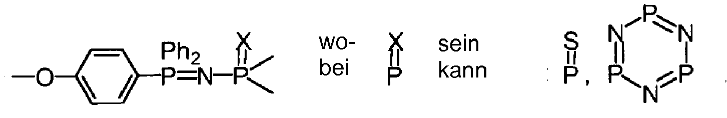 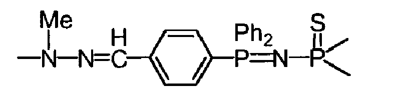
wobei m Motive (X) direkt mit dem zentralen Kern (N) verbunden sind und/oder x Motive mindestens eine Generation des Dendrimers bilden, und
- mindestens ein zweites Motiv (Y), das die Fähigkeit zur Absorption von zwei Photonen aufweist, mit der Valenz m", wobei m Motive (Y) direkt mit dem zentralen Kern verbunden sind und/oder y Motive (Y) zu mindestens einer Generation des Dendrimers gehören oder mindestens eine Generation des Dendrimers bilden, wobei das chromophore Motiv (Y) aus einem chromophoren Multiphotonenradikal (Y1) besteht, das mit mindestens einem Pfropfappendix (Y2) verbunden ist,
• wobei das chromophore Radikal (Y1) einer der beiden folgenden Strukturen entspricht: 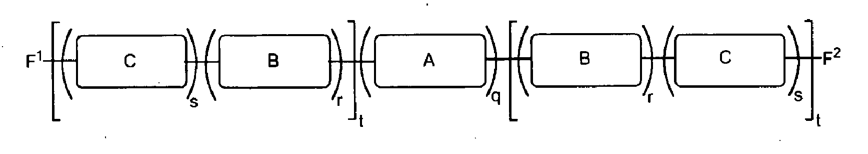 oder 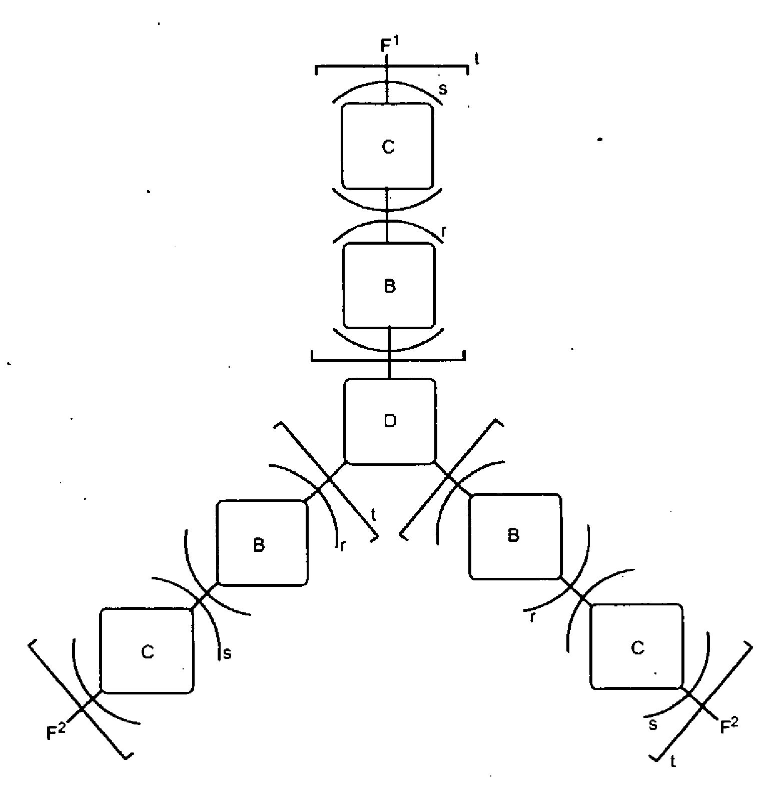
in denen F¹ und F², die identisch oder verschieden sind, eine elektroaktive Gruppe (Elektronendonator oder -akzeptor) bezeichnen, wobei F¹ mit einem Pfropfappendix verbunden ist und F² mit 0, 1 oder 2 Pfropfappendixen verbunden ist, wobei F¹ und F² vorzugsweise ausgewählt werden aus: 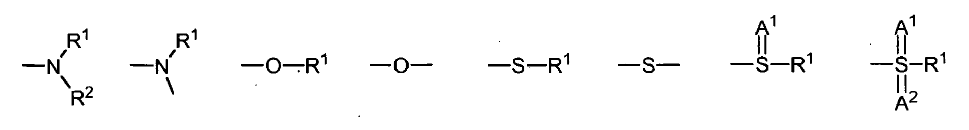
wobei R¹ und R², die identisch oder verschieden sind, bezeichnen entweder einen Pfropfappendix (Y2) oder ein Radikal, ausgewählt aus der Gruppe bestehend aus Wasserstoff, den Alkylradikalen von C₁ bis C₂₅, vorzugsweise von C₁ bis C₁₂, (CH₂)ₘ₁-SO₃M, (CH₂)ₘ₁ NAlk₃⁺, (CH₂)ₘ₁-(OCH₂-CH₂)ₚ-OH, , wobei M ein Alkalimetal ist und m1 gleich 0 ist oder eine Ganzzahl von 1 bis 12, vorzugsweise von 1 bis 6, ist, wobei p eine Ganzzahl von 1 bis 25 ist,
wobei A¹ und A², die identisch oder verschieden sind, O, NH, NAlk oder NCF₃ darstellen,
und in denen 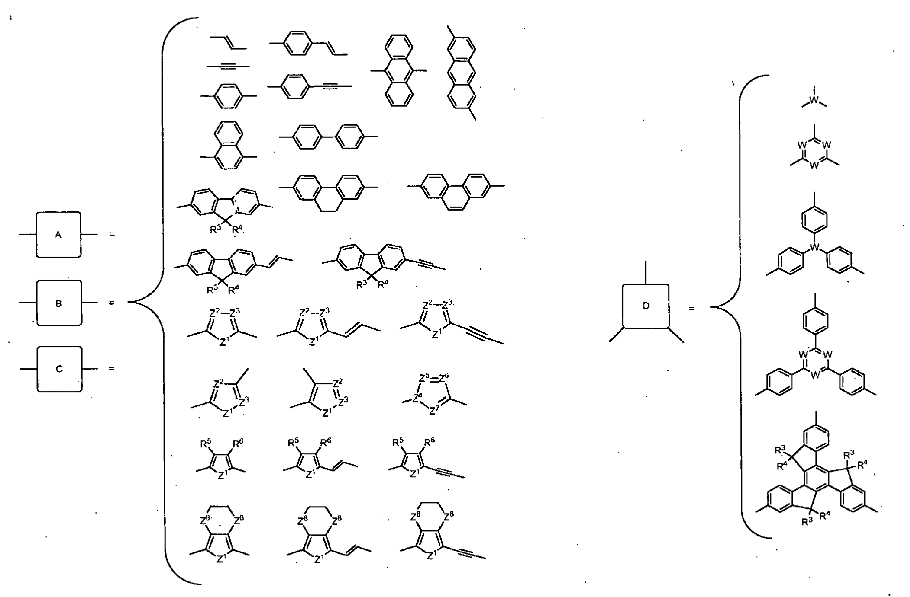
R³ und R⁴, die identisch oder verschieden sind, ein Radikal bezeichnen, ausgewählt aus der Gruppe bestehend aus Wasserstoff, den Alkylradikalen von C₁ bis C₂₅, vorzugsweise von C₁ bis C₁₂, (CH₂)ₘ₁-SO₃M, (CH₂)ₘ₁ Nalk₃⁺, (CH₂)ₘ₁-(OCH₂-CH₂)ₚ-OH, wobei M ein Alkalimetal ist und m1 gleich 0 ist oder eine Ganzzahl von 1 bis 12, vorzugsweise von 1 bis 6, ist, wobei p eine Ganzzahl von 1 bis 25 ist,
wobei R⁵ und R⁶, die identisch oder verschieden sind, jeweils ein Radikal OH, OAlk, OAr, SH, SAlk oder SAr darstellen,
wobei Z¹ O, S, NH, NAlk, NAr, PH, PAlk oder PAr darstellt,
wobei Z², Z³ jeweils CH, CAlk oder N darstellen,
wobei Z⁴ N oder P darstellt,
wobei Z⁵, Z⁶, Z⁷ jeweils CH, CAlk oder N darstellen,
wobei Z⁸ O oder S darstellt,
wobei q eine Ganzzahl von 1 bis 7 ist,
wobei r eine Ganzzahl von 1 bis 7 ist,
wobei s eine Ganzzahl von 0 bis 7 ist,
wobei t eine Ganzzahl von 1 bis 7 ist,
W CH oder B oder N oder P oder PO ist,
und
• wobei der Pfropfappendix (Y2) ausgewählt wird aus: 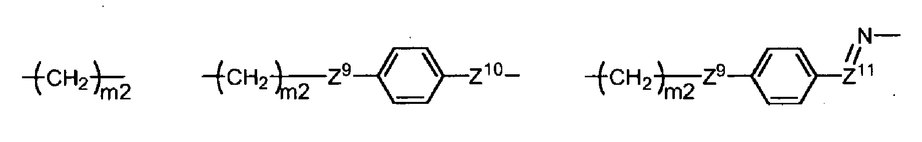 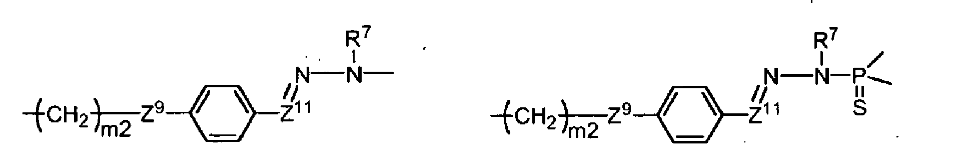
wobei m2 eine Ganzzahl von 0 bis 12, vorzugsweise von 0 bis 6, ist,
wobei Z⁹ und Z¹⁰, die identisch oder verschieden sind, O, S, NH, NAlk oder NAr darstellen,
wobei Z¹¹ CH, CAlk, CAr, PAlk₂ oder PAr₂ darstellt.

2. Verbindung nach Anspruch 1, **dadurch gekennzeichnet, dass** n größer als 3 ist.

3. Verbindung nach einem der Ansprüche 1 oder 2, **dadurch gekennzeichnet, dass** der Kern (N) 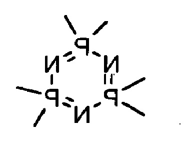 ist.

4. Verbindung nach einem der Ansprüche 1 bis 3, **dadurch gekennzeichnet, dass** das Motiv (Y) ausgewählt ist aus der Gruppe bestehend aus: 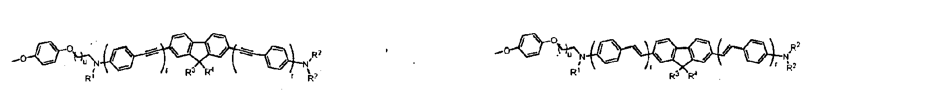 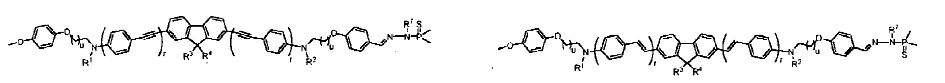 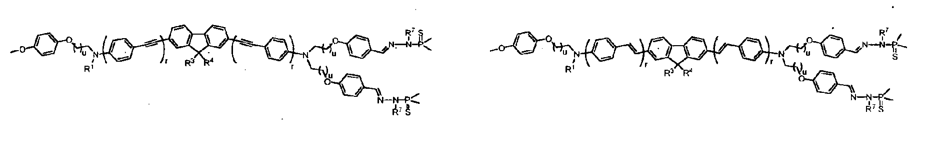
wobei R¹, R², R³, R⁴, R⁷ und r die gleiche Bedeutung haben wie vorstehend,
wobei u eine Ganzzahl von 1 bis 11, vorzugsweise von 1 bis 5, ist.

5. Verbindung nach einem der vorstehenden Ansprüche, **dadurch gekennzeichnet, dass** das Dendrimer mindestens ein drittes Motiv (Z) aufweist, das die äußere Schicht der Generation Gn des Dendrimers bildet und die Fähigkeit zur Löslichkeit des Dendrimers entweder in Wasser oder in organischen Lösungsmitteln aufweist.

6. Verbindung nach dem vorstehenden Anspruch, **dadurch gekennzeichnet, dass** das Motiv (Z) ein Ammonium- oder Pyridinium- oder Carboxylat- oder Sulfonat-Motiv oder eine Polyethylenglycol-Kette ist.

7. Verbindung nach Anspruch 5 oder 6, **dadurch gekennzeichnet, dass** sie einer der Formeln: 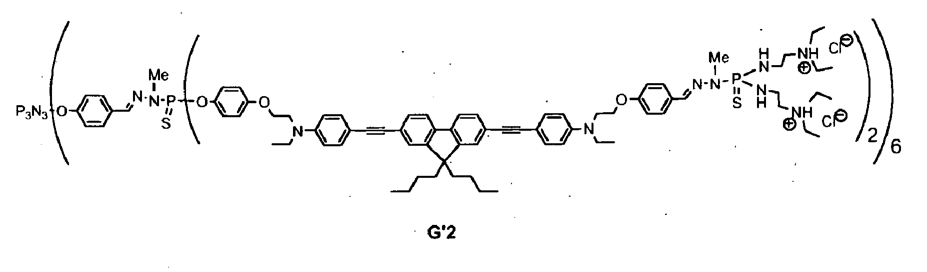 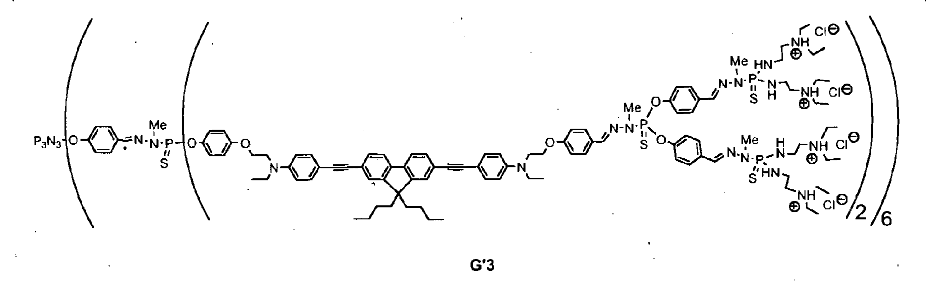 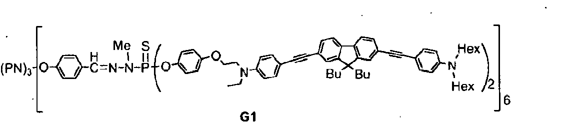 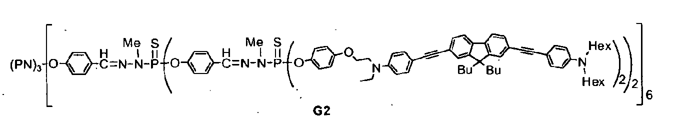 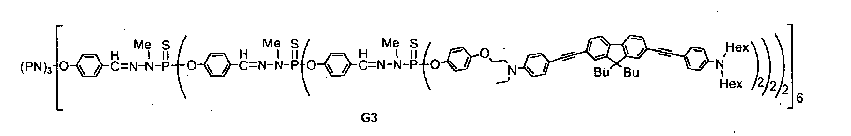 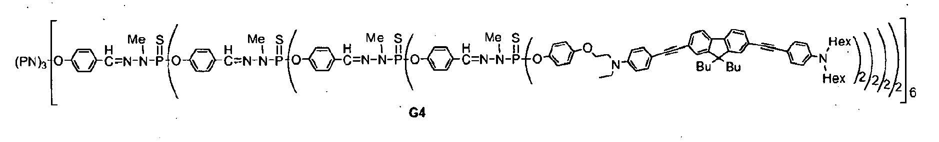 entspricht.

8. Verbindung nach Anspruch 5 oder 6, **dadurch gekennzeichnet, dass** sie einer der Formeln: 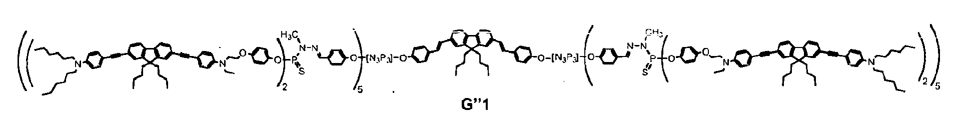 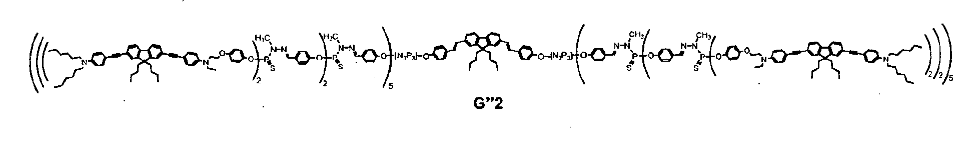 entspricht.

9. Verbindung nach einem der vorstehenden Ansprüche, **dadurch gekennzeichnet, dass** sie zwei Kerne mit identischer oder verschiedener Valenz aufweist, die direkt miteinander verbunden sind oder durch ein Motiv (Y), das die Fähigkeit zur Absorption von zwei Photonen aufweist, miteinander verbunden sind.

10. Verbindung nach einem der vorstehenden Ansprüche, **dadurch gekennzeichnet, dass** sie mindestens zwei Typen von Motiven (Y, Y') aufweist, die die Fähigkeit zur Absorption von zwei Photonen aufweisen.

11. Verbindung nach Anspruch 10, **dadurch gekennzeichnet, dass** die verschiedenen Typen von Motiven, die die Fähigkeit zur Absorption von zwei Photonen aufweisen, die Fähigkeit zur Emission mit verschiedenen Wellenlängen besitzen.

12. Verbindung nach Anspruch 11, **dadurch gekennzeichnet, dass** die verschiedenen Typen von Motiven, die die Fähigkeit zur Absorption von zwei Photonen aufweisen, die Fähigkeit zur Emission mit verschiedenen Wellenlängen besitzen, deren Summe zur Emission von weißem Licht beiträgt.

13. Verwendung einer Verbindung nach einem der Ansprüche 1 bis 12 in Verfahren oder Vorrichtungen zur Bilderzeugung durch Photonen, Photonen Diagnose, Phototherapie oder photodynamische Therapie, die die Absorption von einem, zwei oder drei Photonen nutzen.

14. Verwendung nach Anspruch 13 im Rahmen eines Zweiphotonenverfahrens oder einer Zweiphotonenvorrichtung.

15. Verwendung nach Anspruch 13 oder 14 im Rahmen eines Verfahrens oder einer Vorrichtung zur Bilderzeugung durch Photonen.
